# EUROPEAN PATENT SPECIFICATION

(11) **EP 3 184 414 B1**
(45) Date of publication and mention of the grant of the patent: **28.02.2018**
(21) Application number: 16206072.7
(22) Date of filing: 22.12.2016
(51) Int. Cl.: B62M 7/12, B62M 9/14, B62M 11/16, F16H 57/035, F16H 57/02

(54) **POWER TRANSMISSION DEVICE FOR SADDLE-RIDDEN VEHICLE**
LEISTUNGSÜBERTRAGUNGSVORRICHTUNG FÜR EIN SATTELFAHRZEUG
DISPOSITIF DE TRANSMISSION DE PUISSANCE POUR VÉHICULE À SELLE

(30) Priority: 25.12.2015 JP 2015252927; 25.12.2015 JP 2015252926
(43) Date of publication of application: 28.06.2017
(73) Proprietor: Honda Motor Co., Ltd., Tokyo 107-8556 (JP)
(72) Inventor: HAYAKAWA, Takashi, SAITAMA, 351-0193 (JP); SUZUKI, Hitoshi, SAITAMA, 351-0193 (JP); KOMURO, Hirokazu, SAITAMA, 351-0193 (JP); ENOMOTO, Tsukasa, SAITAMA, 351-0193 (JP); HIRAYAMA, Shuji, SAITAMA, 351-0193 (JP)
(74) Representative: Brevalex

(56) References cited:
- JP-A- 2014 190 364
- JP-A- 2014 208 524

## Description

### TECHNICAL FIELD

The present invention relates to a power transmission device for a saddle-ridden vehicle, comprising a belt type continuously variable transmission that is provided between a power source and a transmission shaft so as to enable a rotational speed of power from the power source to be steplessly changed, and a mechanical transmission that is disposed between the transmission shaft and an axle of a rear wheel equipped with a rear wheel brake and comprises a planetary gear mechanism and a transmission clutch for switching over a gear position of the planetary gear mechanism, wherein the transmission clutch and a second power transmission gear rotating together with a clutch outer of the transmission clutch are coaxially disposed on the transmission shaft, a first power transmission gear is fixedly provided on the transmission shaft, the planetary gear mechanism, a third power transmission gear meshing with the first power transmission gear so as to rotate together with a ring gear of the planetary gear mechanism, and a fourth power transmission gear meshing with the second power transmission gear so as to rotate together with a sun gear of the planetary gear mechanism are coaxially disposed on an intermediate shaft having an axis parallel to the transmission shaft, an output gear transmitting power to the axle is fixedly provided on the intermediate shaft, the rear wheel is formed so as to have a wheel hub supported on the axle, a wheel rim surrounding the wheel hub so as to have a tire mounted thereon, and a linking part providing a link between the wheel hub and the wheel rim, and the belt type continuously variable transmission is disposed so as to sandwich the mechanical transmission between the belt type continuously variable transmission and the linking part in a vehicle width direction.

### BACKGROUND ART

Such a power transmission device is known in, for example, Patent Document 1.

### PRIOR ART DOCUMENT

### PATENT DOCUMENT

[Patent Document 1] Japanese Patent Application Laid-open No. 2014-208524. Document JP2014190364, which discloses all the features of the preamble of claim 1, is also comprised in the state of the art.

### SUMMARY OF THE INVENTION

### PROBLEM TO BE SOLVED BY THE INVENTION

In a saddle-ridden vehicle equipped with such a power transmission device, in general a rear wheel brake for braking a rear wheel is provided on a hub of the rear wheel. However, when a power transmission device having a belt type continuously variable transmission and a mechanical transmission is disposed around a rear wheel, due to the large number of components, compared with a usual power transmission device having no mechanical transmission, the amount of projection from the rear wheel toward the outside in the vehicle width direction easily increases; in addition, due to a rear wheel brake being provided on the rear wheel, the amount of projection from the rear wheel toward the outside in the vehicle width direction easily further increases, and there is the problem that in a saddle-ridden vehicle it is difficult to ensure the bank angle for the vehicle.

The present invention has been accomplished in light of such circumstances, and it is an object thereof to provide a power transmission device for a saddle-ridden vehicle that suppresses projection from a rear wheel toward an outside in a vehicle width direction and enables a dimension in the vehicle width direction to be reduced.

### MEANS TO SOLVE THE PROBLEMS

In order to achieve the object, according to a first aspect of the present invention, there is provided a power transmission device for a saddle-ridden vehicle, comprising a belt type continuously variable transmission that is provided between a power source and a transmission shaft so as to enable a rotational speed of power from the power source to be steplessly changed, and a mechanical transmission that is disposed between the transmission shaft and an axle of a rear wheel equipped with a rear wheel brake and comprises a planetary gear mechanism and a transmission clutch for switching over a gear position of the planetary gear mechanism, wherein the transmission clutch and a second power transmission gear rotating together with a clutch outer of the transmission clutch are coaxially disposed on the transmission shaft, a first power transmission gear is fixedly provided on the transmission shaft, the planetary gear mechanism, a third power transmission gear meshing with the first power transmission gear so as to rotate together with a ring gear of the planetary gear mechanism, and a fourth power transmission gear meshing with the second power transmission gear so as to rotate together with a sun gear of the planetary gear mechanism are coaxially disposed on an intermediate shaft having an axis parallel to the transmission shaft, an output gear transmitting power to the axle is fixedly provided on the intermediate shaft, the rear wheel is formed so as to have a wheel hub supported on the axle, a wheel rim surrounding the wheel hub so as to have a tire mounted thereon, and a linking part providing a link between the wheel hub and the wheel rim, and the belt type continuously variable transmission is disposed so as to sandwich the mechanical transmission between the belt type continuously variable transmission and the linking part in a vehicle width direction, characterized in that a housing recess part housing part of the mechanical transmission on one side in the vehicle width direction of the linking part is formed in the rear wheel, a rear wheel brake disposed on an other side in the vehicle width direction of the linking part is provided on the rear wheel, and the first power transmission gear and the planetary gear mechanism are disposed within the housing recess part so as to overlap part of the wheel rim when viewed from a direction orthogonal to an axis of the transmission shaft and the axis of the intermediate shaft.

Further, according to a second aspect of the present invention, in addition to the first aspect, the wheel hub is formed so as to overlap the wheel rim when viewed from a direction orthogonal to an axis of the axle, and a brake disk of a disk brake, which is the rear wheel brake, is mounted on the wheel hub so as to be disposed on said other side in the vehicle width direction of the linking part.

According to a third aspect of the present invention, in addition to the first aspect, there is provided the power transmission device for a saddle-ridden vehicle, further comprising a transmission case housing the belt type continuously variable transmission and the mechanical transmission, wherein the transmission case comprises a case main body that extends in a vehicle fore-and-aft direction on one side of the rear wheel, a cover member that forms a belt type continuously variable transmission chamber housing the belt type continuously variable transmission between the cover member and the case main body and is fastened to the case main body from a side opposite to the rear wheel, and a gear cover that, while forming a mechanical transmission chamber housing the mechanical transmission between the gear cover and the case main body, is fastened to the case main body so as to cover part of the case main body from the rear wheel side, an end part on the gear cover side of the transmission shaft is rotatably supported on the gear cover via a first bearing, an end part on the gear cover side of the intermediate shaft is rotatably supported on the gear cover via a second bearing, a third bearing is disposed between the gear cover and the axle extending rotatably through the gear cover, and an end part on the rear wheel side of the second bearing is disposed further on the rear wheel side than end parts on a side opposite to the rear wheel of the first and third bearings.

According to a fourth aspect of the present invention, in addition to the first aspect, there is provided the power transmission device for a saddle-ridden vehicle, further comprising a transmission case housing the belt type continuously variable transmission and the mechanical transmission, wherein the transmission case comprises a case main body that extends in a vehicle fore-and-aft direction on one side of the rear wheel, a cover member that forms a belt type continuously variable transmission chamber housing the belt type continuously variable transmission between the cover member and the case main body and is fastened to the case main body from a side opposite to the rear wheel, and a gear cover that, while forming a mechanical transmission chamber housing the mechanical transmission between the gear cover and the case main body, is fastened to the case main body so as to cover part of the case main body from the rear wheel side, the transmission clutch, the second power transmission gear, and the first power transmission gear are disposed so as to be arranged in that order from the belt type continuously variable transmission side in a direction along the axis of the transmission shaft, external diameters of the first and second power transmission gears are set smaller than an external diameter of the transmission clutch, and a clearance recess part is formed in an outer face of the gear cover on a radially outer side of the first and second power transmission gears, part of the wheel rim being disposed in the clearance recess part.

According to a fifth aspect of the present invention, in addition to the first aspect, the transmission clutch, the second power transmission gear, and the first power transmission gear are disposed so as to be arranged in that order from the belt type continuously variable transmission side in a direction along the axis of the transmission shaft, the output gear, the fourth power transmission gear, and the planetary gear mechanism are disposed so as to be arranged in that order from the belt type continuously variable transmission side in a direction along the axis of the intermediate shaft, and the second power transmission gear, the first power transmission gear, the fourth power transmission gear, and the planetary gear mechanism are disposed further on the rear wheel side than an end part on the belt type continuously variable transmission side of the output gear.

According to a sixth aspect of the present invention, in addition to the fifth aspect, a relative positions of the planetary gear mechanism and the fourth power transmission gear with respect to the clutch outer are set so that parts of the planetary gear mechanism and the fourth power transmission gear overlap the clutch outer when viewed from a direction along the axes of the transmission shaft and the intermediate shaft, and a relative position of the output gear with respect to the clutch outer is set so that at least part of the output gear overlaps the clutch outer when viewed from a direction orthogonal to the axes of the intermediate shaft and the transmission shaft.

According to a seventh aspect of the present invention, in addition to the sixth aspect, a restricting member forming, in cooperation with a rotation-preventing member supported on the clutch outer, a one-way clutch for restricting a direction of rotation of the clutch outer is disposed between the clutch outer and the second power transmission gear in an axial direction of the transmission shaft while overlapping the output gear when viewed from a direction orthogonal to the axes of the intermediate shaft and the transmission shaft.

According to an eighth aspect of the present invention, in addition to the seventh aspect, there is provided the power transmission device for a saddle-ridden vehicle, further comprising a transmission case housing the belt type continuously variable transmission and the mechanical transmission, wherein the transmission case comprises a case main body that extends in a vehicle fore-and-aft direction on one side of the rear wheel, a cover member that forms a belt type continuously variable transmission chamber housing the belt type continuously variable transmission between the cover member and the case main body and is fastened to the case main body from a side opposite to the rear wheel, and a gear cover that forms a mechanical transmission chamber housing the mechanical transmission between the gear cover and the case main body, the gear cover is fastened to the case main body so as to cover part of the case main body from the rear wheel side while supporting, in cooperation with the case main body, the restricting member having a collar disposed between the restricting member and the case main body, and a mating face of the gear cover and the case main body is disposed on the side opposite to the rear wheel (WR) with respect to an abutment face of the collar and the restricting member.

According to a ninth aspect of the present invention, in addition to the fifth aspect, a clutch inner of the transmission clutch is relatively non-rotatably joined to the transmission shaft, the clutch outer is relatively rotatably supported on the transmission shaft, the planetary gear mechanism comprises the ring gear and the sun gear, a plurality of planetary gears that mesh with the ring gear and the sun gear, and a planetary carrier that rotatably supports the planetary gears and has the output gear synchronously and operatively coupled to the planetary carrier, and part of the fourth power transmission gear is disposed so as to overlap at least part of the sun gear when viewed from a direction orthogonal to the axis of the intermediate shaft.

According to a tenth aspect of the present invention, in addition to the fifth aspect, a clutch inner of the transmission clutch is relatively non-rotatably joined to the transmission shaft, the clutch outer is relatively rotatably supported on the transmission shaft, the planetary gear mechanism comprises the ring gear and the sun gear, a plurality of planetary gears that mesh with the ring gear and the sun gear, and a planetary carrier that rotatably supports the planetary gears and has the output gear synchronously and operatively coupled to the planetary carrier, a cylindrical boss part joined relatively non-rotatably to the intermediate shaft is provided integrally with the planetary carrier, and the fourth power transmission gear overlapping at least part of the boss part when viewed from a direction orthogonal to the axis of the intermediate shaft is relatively rotatably supported on an outer periphery of the boss part.

According to an eleventh aspect of the present invention, in addition to the fifth aspect, part of a transmission case housing the belt type continuously variable transmission and the mechanical transmission is formed from a case main body extending in a vehicle fore-and-aft direction on one side of the rear wheel, and a gear cover forming, between the gear cover and the case main body, a mechanical transmission chamber housing the mechanical transmission, the output gear is formed, close to the case main body, integrally with the intermediate shaft having opposite end parts thereof rotatably supported on the case main body and the gear cover, and the fourth power transmission gear, the planetary gear mechanism, and the third power transmission gear are formed so as to be able to be assembled onto the intermediate shaft from an end part on the gear cover side of the intermediate shaft.

According to a twelfth aspect of the present invention, in addition to the fifth aspect, there is provided the power transmission device for a saddle-ridden vehicle, further comprising a transmission case housing the belt type continuously variable transmission and the mechanical transmission, wherein the transmission case comprises a case main body that extends in a vehicle fore-and-aft direction on one side of the rear wheel, a cover member that forms a belt type continuously variable transmission chamber housing the belt type continuously variable transmission between the cover member and the case main body and is fastened to the case main body from a side opposite to the rear wheel, and a gear cover that, while forming a mechanical transmission chamber housing the mechanical transmission between the gear cover and the case main body, is fastened to the case main body so as to cover part of the case main body from the rear wheel side, a fourth bearing is disposed between a bulge part that is formed on the case main body so as to bulge toward the belt type continuously variable transmission chamber side and the transmission shaft extending through the bulge part, and a follower pulley forming part of the belt type continuously variable transmission is supported on the transmission shaft within the belt type continuously variable transmission chamber so that at least part of the fourth bearing overlaps part of the follower pulley when viewed from a direction orthogonal to the axis of the transmission shaft.

Furthermore, according to a thirteenth aspect of the present invention, in addition to the first aspect, there is provided the power transmission device for a saddle-ridden vehicle, further comprising a transmission case housing the belt type continuously variable transmission and the mechanical transmission, wherein the transmission case comprises a case main body that extends in a vehicle fore-and-aft direction on one side of the rear wheel, a cover member that forms a belt type continuously variable transmission chamber housing the belt type continuously variable transmission between the cover member and the case main body and is fastened to the case main body from a side opposite to the rear wheel, and a gear cover that, while forming a mechanical transmission chamber housing the mechanical transmission between the gear cover and the case main body, is fastened to the case main body so as to cover part of the case main body from the rear wheel side, the transmission shaft and the intermediate shaft are rotatably supported on the case main body and the gear cover, a first oil supply passage for supplying oil to a first central oil passage coaxially formed in the intermediate shaft is formed in the case main body, a second oil supply passage for supplying oil to a second central oil passage coaxially formed in at least a part of the transmission shaft that corresponds to the mechanical transmission chamber is formed in the gear cover, and the first and second oil supply passages are disposed in parallel to a mating face of the case main body and the gear cover.

### EFFECTS OF THE INVENTION

In accordance with the first aspect of the present invention, since the housing recess part housing part of the mechanical transmission on one side in the vehicle width direction of the linking part linking the wheel hub and the wheel rim in the rear wheel is formed in the rear wheel, and the rear wheel brake is disposed on the other side in the vehicle width direction of the linking part, it is possible to form the housing recess part with a large size, and it is possible to suppress outward projection, in the vehicle width direction, of the power transmission device from the rear wheel by disposing the first power transmission gear and the planetary gear mechanism, which overlap part of the wheel rim when viewed from a direction orthogonal to the axes of the transmission shaft and the intermediate shaft, within the housing recess part, and to reduce the dimension in the vehicle width direction.

Furthermore, in accordance with the second aspect of the present invention, since the wheel hub overlaps the wheel rim when viewed from a direction orthogonal to the axis of the axle, it is possible to dispose the wheel rim and the wheel hub close to each other in a direction along the axis of the axle, thus ensuring that the wheel is sufficiently rigid, and it is also possible to suppress projection of the wheel hub toward the other side in the vehicle width direction, thus improving the appearance of the wheel. Moreover, since the brake disk of the disk brake is disposed on the other side in the vehicle width direction of the linking part, it is possible to prevent the disk brake from interfering with the power transmission device disposed on one side in the vehicle width direction of the linking part, thus enabling the power transmission device to be efficiently disposed close to the rear wheel side and making it easy to mount the disk brake.

In accordance with the third aspect of the present invention, since part of the transmission case housing the belt type continuously variable transmission and the mechanical transmission is formed from the case main body extending in the vehicle fore-and-aft direction and the gear cover fastened to the case main body so as to cover part of the case main body from the rear wheel side while forming the mechanical transmission chamber housing the mechanical transmission between the gear cover and the case main body, the end part on the rear wheel side of the second bearing disposed between the intermediate shaft and the gear cover is disposed further toward the rear wheel side than the end parts, on the side opposite to the rear wheel, of the first bearing disposed between the transmission shaft and the gear cover and the third bearing disposed between the rear wheel axle and the gear cover, it is possible to dispose the planetary gear mechanism and the fourth power transmission gear, which are disposed coaxially with the intermediate shaft, closer to the rear wheel side, and it is possible to reduce the amount of projection of the power transmission device from the rear wheel toward the outside in the vehicle width direction.

In accordance with the fourth aspect of the present invention, since part of the transmission case housing the belt type continuously variable transmission and mechanical transmission is formed from the case main body extending in the vehicle fore-and-aft direction and the gear cover fastened to the case main body so as to cover part of the case main body from the rear wheel side while forming the mechanical transmission chamber housing the mechanical transmission between the gear cover and the case main body, the transmission clutch, the second power transmission gear, and the first power transmission gear are disposed so as to be arranged in that order from the belt type continuously variable transmission side in a direction along the axis of the transmission shaft, a large clearance recess part can be formed in the outer face of the gear cover in the radially outer side of the first and second power transmission gears having external diameters smaller than the external diameter of the transmission clutch, and part of the wheel rim is disposed in the clearance recess part, it is possible to dispose the power transmission device closer to the rear wheel side, and it is possible to further reduce the amount of projection of the power transmission device from the rear wheel toward the outside in the vehicle width direction.

In accordance with the fifth aspect of the present invention, since among the transmission clutch, the first power transmission gear, and the second power transmission gear disposed on the transmission shaft, the transmission clutch is disposed at the position closest to the belt type continuously variable transmission, among the output gear, the fourth power transmission gear, and the planetary gear mechanism disposed on the intermediate shaft, the output gear is disposed at the position closest to the belt type continuously variable transmission, and the second power transmission gear, the first power transmission gear, the fourth power transmission gear, and the planetary gear mechanism are disposed further toward the rear wheel side than the end part on the belt type continuously variable transmission side of the output gear, it is possible to avoid any influence on the positions in a direction along the axis of the first power transmission gear, the second power transmission gear, the fourth power transmission gear, and the planetary gear mechanism even when the width along the axial direction of the output gear is large. Therefore, it is possible to reduce the dimension along the vehicle width direction of the power transmission device while ensuring the degree of freedom in setting the width along the axial direction of the output gear.

In accordance with the sixth aspect of the present invention, since parts of the planetary gear mechanism and the fourth power transmission gear overlap the clutch outer when viewed from a direction along the axes of the transmission shaft and the intermediate shaft, and at least part of the output gear overlaps the clutch outer when viewed from a direction orthogonal to the axes of the intermediate shaft and the transmission shaft, it is possible to reduce the dimension of the power transmission device in the vehicle width direction, it is also possible to reduce the dimension of the power transmission device in a direction orthogonal to the vehicle width direction, and it is thus possible to further reduce the size of the power transmission device.

In accordance with the seventh aspect of the present invention, it is possible to efficiently dispose the restricting member of the one-way clutch in a region surrounded by the clutch outer, the second power transmission gear, and the output gear due to the restricting member being disposed in this region, and it is possible to further reduce the dimension of the power transmission device in the vehicle width direction.

In accordance with the eighth aspect of the present invention, since the restricting member having the collar disposed between itself and the case main body is cooperatively supported by the case main body and the gear cover fastened to the case main body so as to cover part of the case main body from the rear wheel side, and the mating face of the gear cover and the case main body is disposed on the side opposite to the rear wheel with respect to the abutment face of the collar and the restricting member, it is possible to suppress the amount of projection of a fastening boss, etc. for fastening the gear cover to the case main body from the transmission case toward the rear wheel side, and enabling the mechanical transmission to be disposed closer to the rear wheel side enables the power transmission device and the rear wheel to be disposed more compactly in the vehicle width direction. Moreover, since, due to the collar being disposed between the restricting member and the case main body, the restricting member is supported on the position spaced in the vehicle width direction with respect to the mating face of the gear cover and the case main body, it is possible to ensure the degree of freedom in disposing the restricting member in the vehicle width direction.

In accordance with the ninth aspect of the present invention, since the clutch inner of the transmission clutch is relatively non-rotatably joined to the transmission shaft, the clutch outer is relatively rotatably supported on the transmission shaft, and part of the fourth power transmission gear rotating together with the sun gear of the planetary gear mechanism overlaps at least part of the sun gear when viewed from a direction orthogonal to the axis of the intermediate shaft, it is possible to dispose the sun gear and the fourth power transmission gear together in a compact manner in a direction along the axis of the intermediate shaft.

In accordance with the tenth aspect of the present invention, since the clutch inner of the transmission clutch is relatively non-rotatably joined to the transmission shaft, the clutch outer is relatively rotatably supported on the transmission shaft, the cylindrical boss part relatively non-rotatably joined to the intermediate shaft is provided integrally with the planetary carrier of the planetary gear mechanism, and the fourth power transmission gear overlapping at least part of the boss part when viewed from a direction orthogonal to the axis of the intermediate shaft is relatively rotatably supported on the outer periphery of the boss part, it is possible to dispose the planetary carrier and the fourth power transmission gear together in a compact manner in a direction along the axis of the intermediate shaft.

In accordance with the eleventh aspect of the present invention, since the opposite end parts of the intermediate shaft are rotatably supported on the case main body and the gear cover forming part of the transmission case, the output gear is formed integrally with one end side, close to the case main body, of the intermediate shaft, and the fourth power transmission gear, the planetary gear mechanism, and the third power transmission gear can be assembled onto the intermediate shaft from the end part, on the gear cover side, of the intermediate shaft, it becomes easy to assemble the fourth powertransmission gear, the planetary gear mechanism, and the third power transmission gear onto the intermediate shaft integrally having the output gear.

In accordance with the twelfth aspect of the present invention, since the transmission case includes the case main body, the cover member forming the belt type continuously variable transmission chamber between itself and the case main body, and the gear cover forming the mechanical transmission chamber between itself and the case main body, the fourth bearing is disposed between the transmission shaft and the bulge part formed on the case main body so as to bulge toward the belt type continuously variable transmission chamber side, and at least part of the fourth bearing overlaps part of the follower pulley forming part of the belt type continuously variable transmission when viewed from a direction orthogonal to the axis of the transmission shaft, it is possible to form the belt type continuously variable transmission chamber and the mechanical transmission chamber as a whole in a compact manner in the axial direction of the transmission shaft by making part of the mechanical transmission chamber bulge toward the belt type continuously variable transmission chamber side, thus further reducing the dimension of the power transmission device in the vehicle width direction.

Moreover, in accordance with the thirteenth aspect of the present invention, since the transmission case is formed from the case main body, the cover member forming the belt type continuously variable transmission chamber between itself and the case main body, and the gear cover forming the mechanical transmission chamber between itself and the case main body, the transmission shaft and the intermediate shaft are rotatably supported on the case main body and the gear cover, the first oil supply passage for supplying oil to the first central oil passage coaxially provided in the intermediate shaft is formed in the case main body, the second central oil passage coaxially provided in the transmission shaft in at least a portion corresponding to the mechanical transmission chamber is formed in the gear cover, and the first and second oil supply passages are parallel to the mating face of the case main body and the gear cover, it is possible to suppress projection of the portion, where the oil supply passage is formed, from the transmission case in the vehicle width direction when forming the first and second oil supply passages, thus further reducing the dimension of the power transmission device in the vehicle width direction.

### BRIEF DESCRIPTION OF THE DRAWINGS

[FIG. 1] It is a left side view of an essential part of a two-wheeled motor vehicle.
[FIG. 2] It is a sectional view along line 2-2 in FIG. 1.
[FIG. 3] It is an enlarged view of an essential part of FIG. 2.
[FIG. 4] It is a partially cutout enlarged view of an essential part of FIG. 1.
[FIG. 5] It is a view of a rear part of a transmission case from a rear wheel side.
[FIG. 6] It is a sectional view along line 6-6 in FIG. 3 in a state in which a gear cover is omitted.
[FIG. 7] It is an enlarged view of a part shown by arrow 7 in FIG. 3.
[FIG. 8] It is a sectional view along line 8-8 in FIG. 3 for showing a state in which a restricting member is mounted.
[FIG. 9] It is a sectional view along line 9-9 in FIG. 5.

### MODE FOR CARRYING OUT THE INVENTION

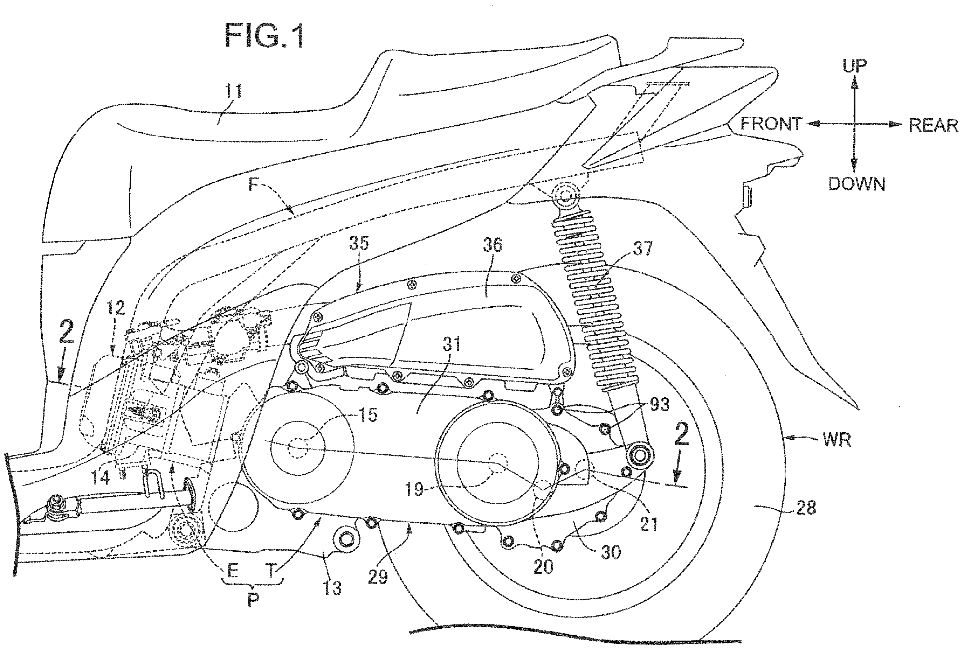

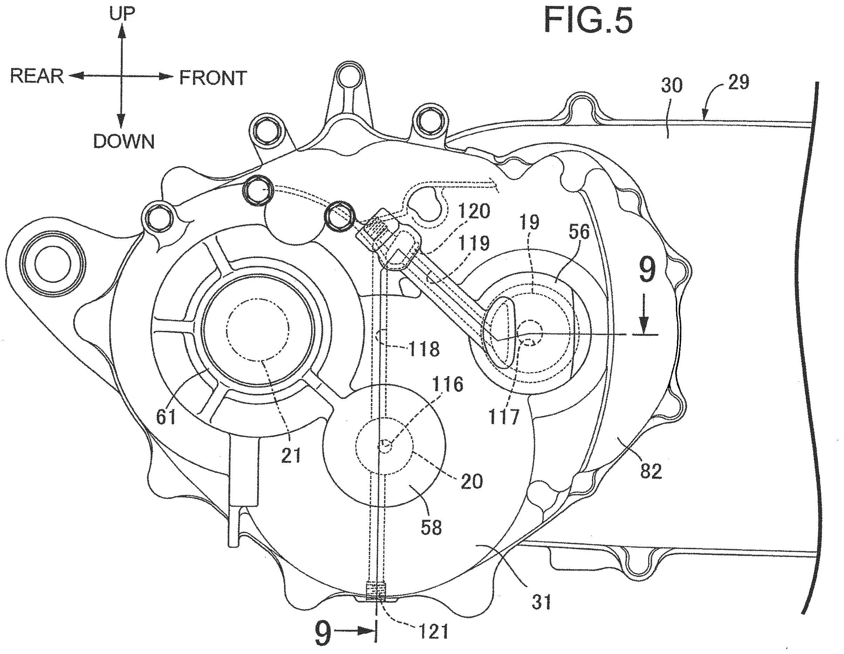

An embodiment of the present invention is explained below by reference to FIG. 1 to FIG. 9. First, in FIG. 1, a riding seat 11 is supported on a rear part of a vehicle body frame F of a two-wheeled motor vehicle, which is a saddle-ridden vehicle, and a power unit P exerting power for driving a rear wheel WR is disposed beneath the riding seat 11. The power unit P is formed from a water-cooled engine E, which is a power source, and a power transmission device T for transmitting the power from the engine E to the rear wheel WR.

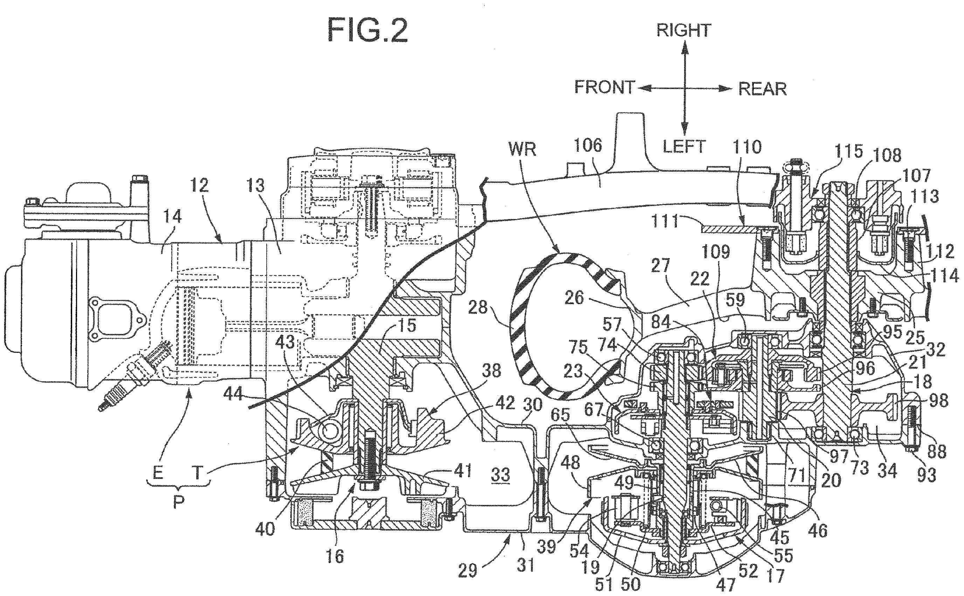

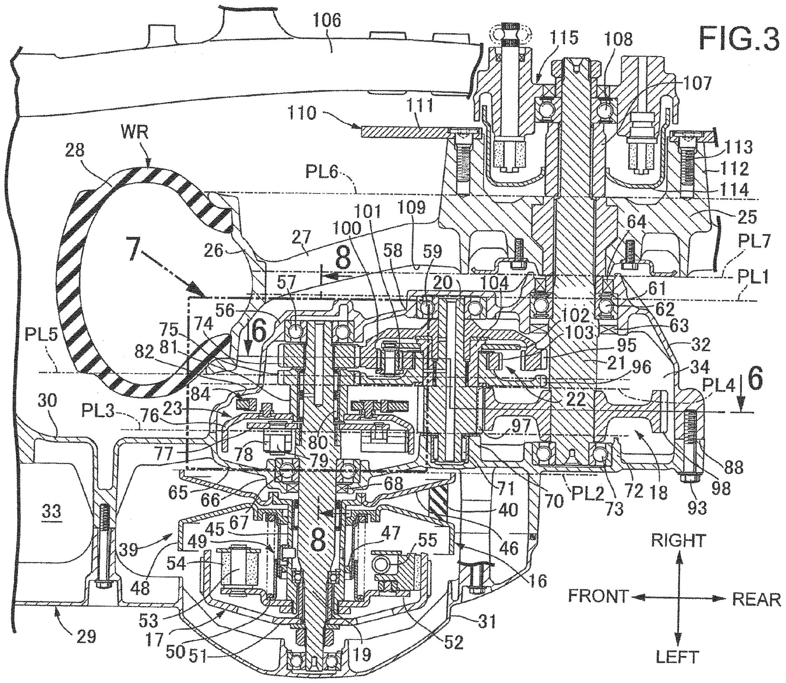

Referring in addition to FIG. 2 and FIG. 3, an engine main body 12 of the engine E is supported for up-and-down swinging movement on a lower part of a vehicle fore-and-aft direction intermediate part of the vehicle body frame F, and a crankshaft 15 having an axis along the vehicle width direction is rotatably supported on a crankcase 13 of the engine main body 12.

The power transmission device T includes a belt type continuously variable transmission 16 that transmits the rotational power of the crankshaft 15 so as to steplessly change its rotational speed, a centrifugal type starting clutch 17 disposed between the transmission shaft 19 and the belt type continuously variable transmission 16, and a mechanical transmission 18 provided between the transmission shaft 19 and an axle 21 of the rear wheel WR while including a planetary gear mechanism 22 and a transmission clutch 23 for switching over the gear position of the planetary gear mechanism 22.

The rear wheel WR is formed so as to have a wheel hub 25 supported on the axle 21, a wheel rim 26 surrounding the wheel hub 25 so that a tire 28 can be mounted thereon, and a linking part 27 providing a link between the wheel hub 25 and the wheel rim 26, and the belt type continuously variable transmission 16 is disposed so as to sandwich the mechanical transmission 18 between itself and the linking part 27 in the vehicle width direction.

The power transmission device T is housed in a transmission case 29 extending in the vehicle fore-and-aft direction on one side (in this embodiment the left side) of the rear wheel WR, and the transmission case 29 includes a case main body 30 connectedly provided integrally with the crankcase 13 and extending rearward, a cover member 31 forming, between itself and the case main body 30, a belt type continuously variable transmission chamber 33 housing the belt type continuously variable transmission 16 and fastened to the case main body 30 from the side opposite to the rear wheel WR, and a gear cover 32 fastened to the case main body 30 so as to cover part of the case main body 30 from the rear wheel WR side while forming, between itself and the case main body 30, a mechanical transmission chamber 34 housing the mechanical transmission 18.

An air cleaner 36 forming part of an intake device 35 connected to a cylinder head 14 of the engine main body 12 is disposed above the transmission case 29 and supported on the transmission case 29. A rear cushion unit 37 is provided between a rear part of the case main body 30 of the transmission case 29 and a rear part of the vehicle body frame F.

The belt type continuously variable transmission 16 is formed by winding an endless V belt 40 around a drive pulley 38 and a follower pulley 39, the drive pulley 38 being provided on one end part of the crankshaft 15 projecting into the belt type continuously variable transmission chamber 33 of the transmission case 29, and the follower pulley 39 being relatively rotatably supported on the transmission shaft 19, which has an axis parallel to the crankshaft 15.

The drive pulley 38 includes a fixed pulley half 41 that is fixed to the crankshaft 15 and a movable pulley half 42 that can move toward and away from the fixed pulley half 41, and the movable pulley half 42 is driven in the axial direction by centrifugal force acting on a weight roller 44 disposed between the movable pulley half 42 and a ramp plate 43 fixed to the crankshaft 15.

The follower pulley 39 is formed from a fixed pulley half 46 fixed to a cylindrical inner tube 45 relatively rotatably supported on the transmission shaft 19 while coaxially surrounding the transmission shaft 19, and a movable pulley half 48 that can move toward and away from the fixed pulley half 46 by being fixed to an outer tube 47 coaxially surrounding the inner tube 45 so that it can pivot and move in the axial direction relative to the inner tube 45, and the V belt 40 is wound around between the fixed pulley half 46 and the movable pulley half 48. Furthermore, a torque cam mechanism 49 for applying an axial component of force between the pulley halves 46 and 48 according to a difference in relative rotational phase between the movable pulley half 48 and the fixed pulley half 46 is provided between the inner tube 45 and the outer tube 47, and the movable pulley half 48 is resiliently urged toward the fixed pulley half 46 side by means of a coil spring 50.

The starting clutch 17 is provided between an end part on the cover member 31 side of the transmission shaft 19 and the inner tube 45 so as to attain a connected state in response to the engine rotational speed attaining a predetermined starting rotational speed or above, and includes a bowl-shaped clutch outer 51 fixed to the transmission shaft 19, a clutch inner 52 fixed to the inner tube 45, centrifugal weights 54 axially supported on a plurality of locations of the clutch inner 52 via shafts 53, and a clutch spring 55 provided between each centrifugal weight 54 and the clutch inner 52. In this starting clutch 17, when the centrifugal force acting on each of the centrifugal weights 54 in response to the clutch inner 52 being rotated by rotational power from the belt type continuously variable transmission 16 exceeds the spring urging force of each of the clutch springs 55, the centrifugal weight 54 opens, and the extremity of the centrifugal weight 54 contacts and frictionally engages with the inner periphery of the clutch outer 51, thereby joining the inner tube 45, that is, the fixed pulley half 46, and the clutch outer 51, that is, the transmission shaft 19, to give a connected state.

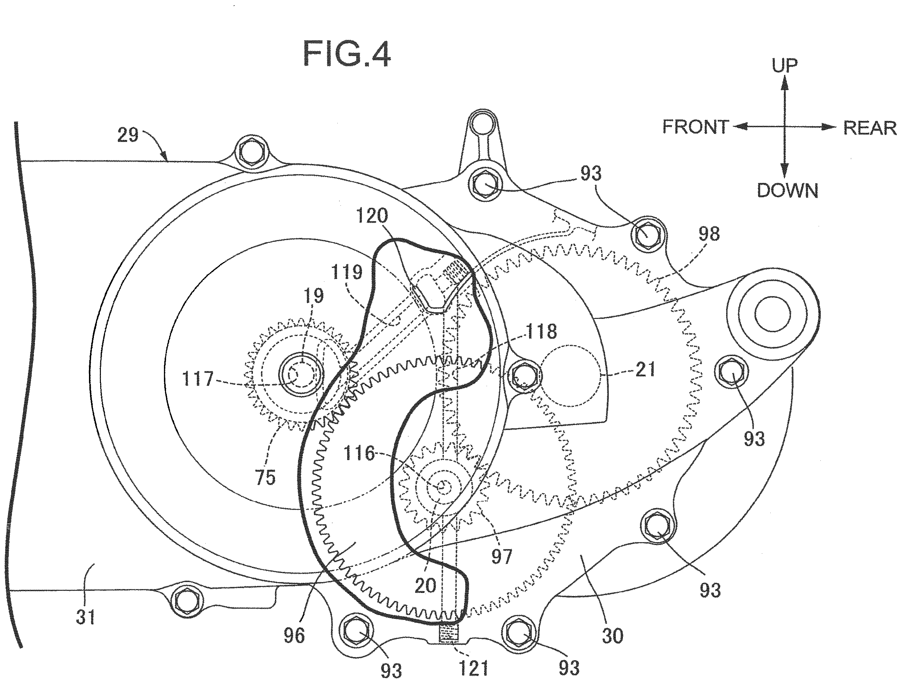

Referring in addition to FIG. 4 to FIG. 6, the transmission shaft 19, an intermediate shaft 20 disposed across a gap in the vehicle fore-and-aft direction with respect to the transmission shaft 19, and the rear wheel axle 21 disposed across a gap in the vehicle fore-and-aft direction with respect to the intermediate shaft 20 are rotatably supported on the transmission case 29 while having mutually parallel axes, and in this embodiment the intermediate shaft 20 is disposed downward and rearward of the transmission shaft 19 in the vehicle fore-and-aft direction, and the axle 21 is disposed upward and rearward of the intermediate shaft 20 in the vehicle fore-and-aft direction.

The transmission shaft 19 having the clutch outer 52 of the starting clutch 17 fixed to an end part thereof on the cover member 31 side extends rotatably through the case main body 30, and an end part on the gear cover 32 side of the transmission shaft 19 is rotatably supported on a bottomed cylindrical first bearing housing 56 formed integrally with the gear cover 32, via a first bearing 57 which is a ball bearing. Furthermore, an end part on the gear cover 32 side of the intermediate shaft 20 is rotatably supported on a bottomed cylindrical second bearing housing 58 formed integrally with the gear cover 32, via a second bearing 59 which is a ball bearing. Furthermore, a third bearing 62, which is a ball bearing, and ring-shaped first and second seal members 63 and 64 sandwiching the third bearing 62 from opposite sides in the axial direction are disposed between a cylindrical third bearing housing 61 formed in the gear cover 32 and the axle 21 extending rotatably through the third bearing housing 61.

Moreover, an end part on the rear wheel WR side of the second bearing 59 is disposed further toward the rear wheel WR side than end parts on the side opposite to the rear wheel WR of the first and third bearings 57 and 62. That is, in this embodiment the relative positions of the first, second, and third bearings 57, 59, and 62 are determined so that a first vertical plane PL1 going through an end face on the rear wheel WR side of the second bearing 59 is present further on the rear wheel WR side than the first bearing 57 and goes through the third bearing 62.

A bulge part 65 bulging toward the belt type continuously variable transmission chamber 33 side is formed integrally with a part, corresponding to the transmission shaft 19, of the case main body 30, the transmission shaft 19 extends rotatably through a cylindrical fourth bearing housing 66 formed on an end part, on the belt type continuously variable transmission chamber 33 side, of the bulge part 65, and a ring-shaped third seal member 68 and a fourth bearing 67, which is a ball bearing, are disposed between the fourth bearing housing 66 and the transmission shaft 19 in sequence from the belt type continuously variable transmission chamber 33 side.

Moreover, the follower pulley 39 forming part of the belt type continuously variable transmission 16 is supported on the transmission shaft 19 within the belt type continuously variable transmission chamber 33 so that at least part of the fourth bearing 67 overlaps part of the follower pulley 39 when viewed from a direction orthogonal to the axis of the transmission shaft 19. That is, in this embodiment the follower pulley 39 is supported on the transmission shaft 19 so that a second vertical plane PL2 going through an end face, on the case main body 30 side, of the fixed pulley half 46 forming part of the follower pulley 39 goes through the fourth bearing 67.

Furthermore, a bottomed cylindrical fifth bearing housing 70 corresponding to the intermediate shaft 20 and a bottomed cylindrical sixth bearing housing 72 corresponding to the axle 21 are formed integrally with the case main body 30, an end part on the case main body 30 side of the intermediate shaft 20 is rotatably supported on the fifth bearing housing 70 via a fifth bearing 71, which is a needle bearing, and an end part on the case main body 30 side of the axle 21 is rotatably supported on the sixth bearing housing 72 via a sixth bearing 73, which is a ball bearing.

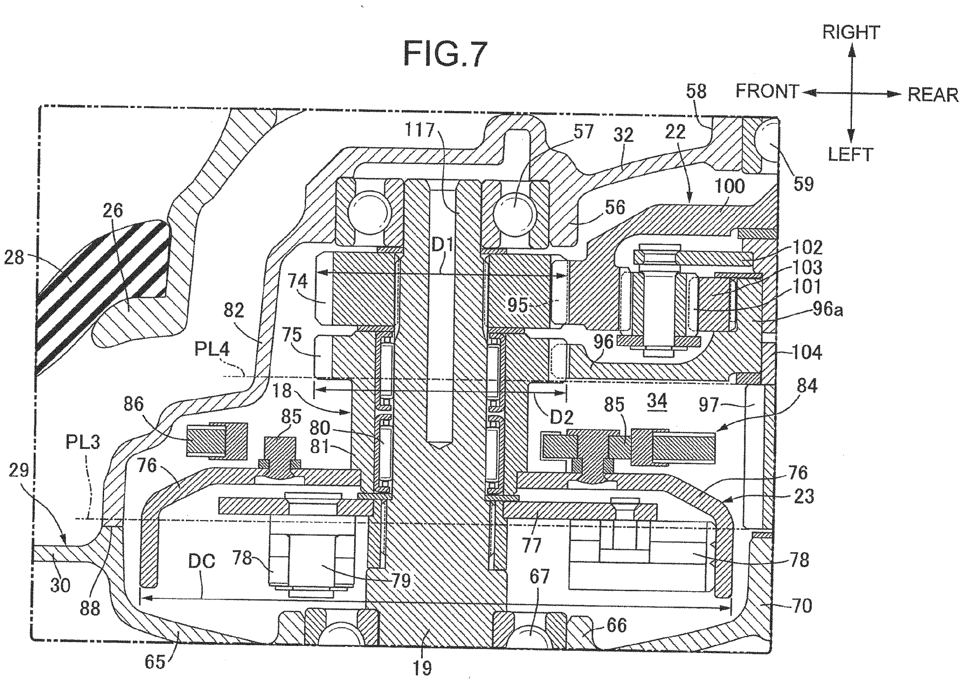

Referring in addition to FIG. 7, the transmission clutch 23 and a second power transmission gear 75 rotating together with a clutch outer 76 of the transmission clutch 23 are coaxially disposed on the transmission shaft 19 within the mechanical transmission chamber 34, and a first power transmission gear 74 is fixedly provided thereon, the first and second power transmission gears 74 and 75 being formed so as to have the same diameter.

Furthermore, the planetary gear mechanism 22, a third power transmission gear 95 meshing with the first power transmission gear 74 so as to rotate together with a ring gear 100 of the planetary gear mechanism 22, and a fourth power transmission gear 96 meshing with the second power transmission gear 75 so as to rotate together with a sun gear 103 of the planetary gear mechanism 22 are coaxially disposed on the intermediate shaft 20, an output gear 97 transmitting power to the axle 21 is fixedly provided thereon, and a driven gear 98 meshing with the output gear 97 is fixed to the axle 21, the third and fourth power transmission gears 95 and 96 being formed so as to have the same diameter.

The transmission clutch 23, the first power transmission gear 74, and the second power transmission gear 75 are disposed so that the transmission clutch 23, the second power transmission gear 75, and the first power transmission gear 74 are arranged in that order from the belt type continuously variable transmission 16 side in a direction along the axis of the transmission shaft 19. Moreover, external diameters D1 and D2 of the first and second power transmission gears 74 and 75 are set smaller than an external diameter DC of the transmission clutch 23, and a clearance recess part 82 is formed in an outer face of the gear cover 32 on the radially outer side of the first and second power transmission gears 74 and 75, part of the wheel rim 26 of the rear wheel WR being disposed in the clearance recess part 82.

Furthermore, the planetary gear mechanism 22, the fourth powertransmission gear 96, and the output gear 97 are disposed so that the output gear 97, the fourth power transmission gear96, and the planetary gear mechanism 22 are arranged in that order from the belt type continuously variable transmission 16 side in a direction along the axis of the intermediate shaft 20, and part of the transmission clutch 23, the second power transmission gear 75, the first power transmission gear 74, the fourth power transmission gear 96, and the planetary gear mechanism 22 are disposed further on the rear wheel WR side than an end part on the belt type continuously variable transmission 16 side of the output gear 97. That is, part of the transmission clutch 23, the second power transmission gear 75, the first power transmission gear 74, the fourth power transmission gear 96, and the planetary gear mechanism 22 are disposed further on the rear wheel WR side than a third vertical plane PL3 going through an end face on the belt type continuously variable transmission 16 side of the output gear 97. In addition, the entire transmission clutch 23 may be disposed further on the rear wheel WR side than the third vertical plane PL3.

The transmission clutch 23 includes the clutch outer 76, which is formed into a bowl shape that is open toward the bulge part 65 side of the case main body 30 and is relatively rotatably supported on the transmission shaft 19, a clutch inner 77 that is relatively non-rotatably linked to the transmission shaft 19 within the clutch outer 76, centrifugal weights 78 that are axially supported on a plurality of locations of the clutch inner 77 via shafts 79, and a clutch spring (not illustrated) that is provided between each centrifugal weight 78 and the clutch inner 77.

The clutch outer 76 is fixed to an end part on the clutch inner 77 side of a cylindrical tube body 81 relatively rotatably supported on the transmission shaft 19 via a seventh bearing 80, which is a needle bearing, and the second power transmission gear 75 is formed integrally with an end part, on the side opposite to the clutch inner 77, of the tube body 81. Furthermore, the first power transmission gear 74 is spline joined to the transmission shaft 19 while having its movement restricted in the axial direction by means of the tube body 81 and the first bearing 57, so as to sandwich the tube body 81 integrally having the second power transmission gear 75 between the first power transmission gear 74 and the clutch inner 77.

In this transmission clutch 23, when the centrifugal force acting on each of the centrifugal weights 78 in response to the clutch inner 77 rotating together with the transmission shaft 19 exceeds the spring urging force of each of the clutch springs, the centrifugal weight 78 frictionally engages with the inner periphery of the clutch outer 76, thus attaining a connected state and making the clutch outer 76 and the second power transmission gear 75 rotate together with the transmission shaft 19.

A connecting rotational speed at which the transmission clutch 23 changes from the cut-off state to the connected state is higher than a connecting rotational speed at which the starting clutch 17 changes from the cut-off state to the connected state, and is also higher than a cut-off rotational speed at which the starting clutch 17 changes from the connected state to the cut-off state.

The direction of rotation of the clutch outer 76 of the transmission clutch 23 is restricted by means of a one-way clutch 84, this one-way clutch 84 including a plurality of rotation-preventing members 85 supported on the clutch outer 76 and a restricting member 86 supported on the transmission case 29 so that these rotation-preventing members 85 can engage therewith.

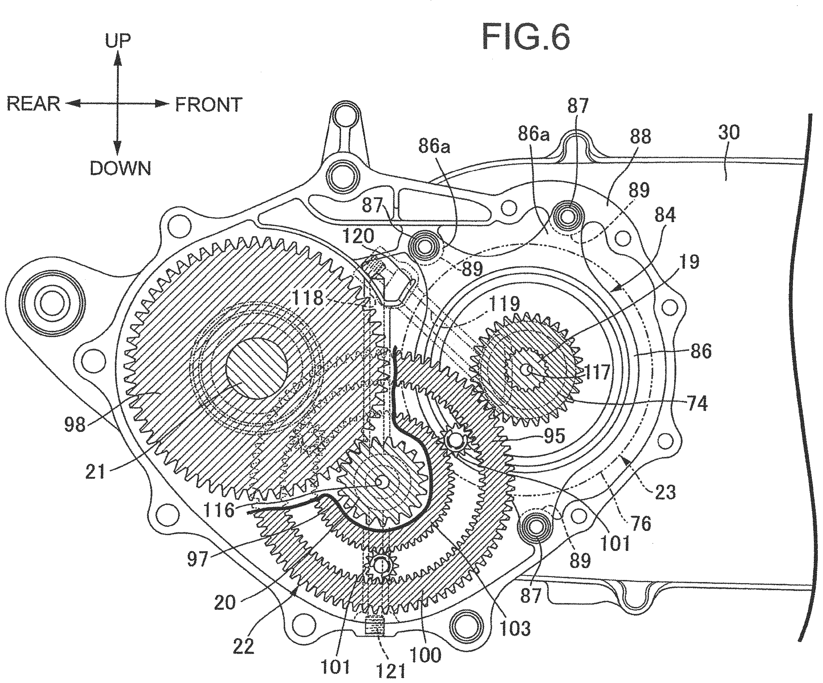

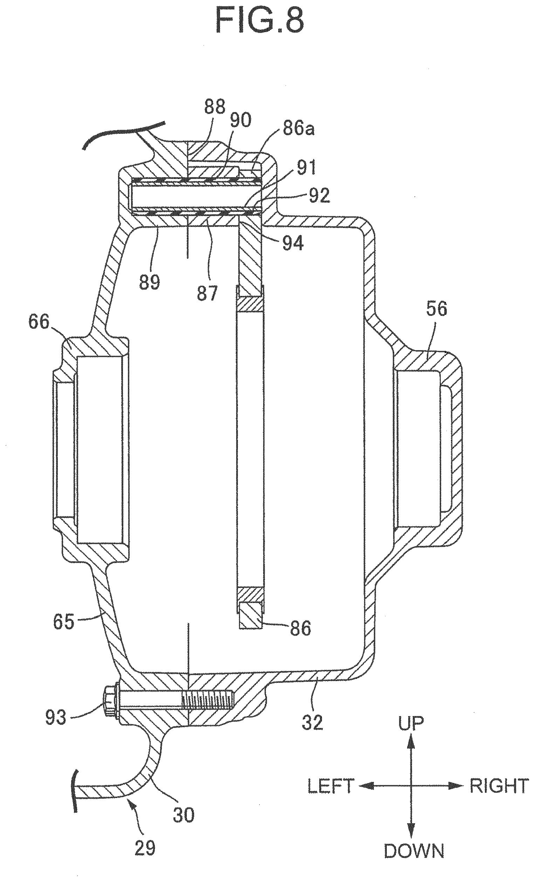

Referring in addition to FIG. 8, the restricting member 86 is formed into a ring shape having three mounting arm portions 86a extending outward as is clearly shown in FIG. 6, and the gear cover 32 is fastened to the case main body 30 so as to cover part of the case main body 30 from the rear wheel WR side while supporting, in cooperation with the case main body 30, the restricting member 86, which has a cylindrical collar 87 disposed between the mounting arm portion 86a and the case main body 30.

A supporting projection 89 projecting in wardly so as to be flush with a mating face 88 of the case main body 30 and the gear cover 32 is provided integrally with the case main body 30 at a position corresponding to the mounting arm portion 86a, and a cylindrical support tube 91 having baked on its outer periphery a rubber 90 is implanted in the supporting projection 89 so as to project toward the gear cover 32 side.

A support hole 92 having a diameter corresponding to the internal diameter of the collar 87 is provided at the tip end portion of the mounting arm portion 86a, and the support tube 87 having the rubber 90 on the outer periphery is inserted through the collar 87 and is also inserted into the support hole 92 of the mounting arm portion 86a sandwiching the collar 87 between itself and the supporting projection 89.

On the other hand, a portion corresponding to the mounting arm portion 86a of the inner face of the gear cover 32 is formed so as to house the tip end portion of the mounting arm portion 86a and the collar 87, and the arm portion 86a of the restricting member 86 abuts against the gear cover 32. Screwing a plurality of bolts 93 inserted through the case main body 30 from the side opposite to the rear wheel WR into the gear cover 32 and tightening them fastens the gear cover 32 to the case main body 30 while supporting, in cooperation with the case main body 30, the restricting member 86 having the collar 87 disposed between itself and the case main body 30, the mating face 88 of the gear cover 32 and the case main body 30 being disposed on the side opposite to the rear wheel WR with respect of an abutment face 94 of the collar 87 and the restricting member 86.

In such a one-way clutch 84, when rotational power in the opposite direction to the direction in which the transmission shaft 19 rotates acts on the clutch outer 76 by virtue of rotational power acting from the engine E side, the rotation-preventing member 85 engages with the restricting member 86, thus restricting rotation of the clutch outer 76. Furthermore, when rotational power in the same direction as the direction in which the transmission shaft 19 rotates acts on the clutch outer 76 by virtue of rotational power acting from the engine E side, engagement between the rotation-preventing member 85 and the restricting member 86 is released, and rotation of the clutch outer 76 is allowed.

The restricting member 86 is disposed between the clutch outer 76 and the second power transmission gear 75 in the axial direction of the transmission shaft 19 so as to overlap the output gear 97 when viewed from a direction orthogonal to the axes of the intermediate shaft 20 and the transmission shaft 19. That is, the restricting member 86 is at a position corresponding to the output gear 97 in the axial direction of the transmission shaft 19 and the intermediate shaft 20, and as shown in FIG. 3 and FIG. 7 the restricting member 86 is disposed between the third vertical plane PL3 going through the end face on the belt type continuously variable transmission 16 side of the output gear 97 and a fourth vertical plane PL4 going through an end face, on the side opposite to the belt type continuously variable transmission 16, of the output gear 97.

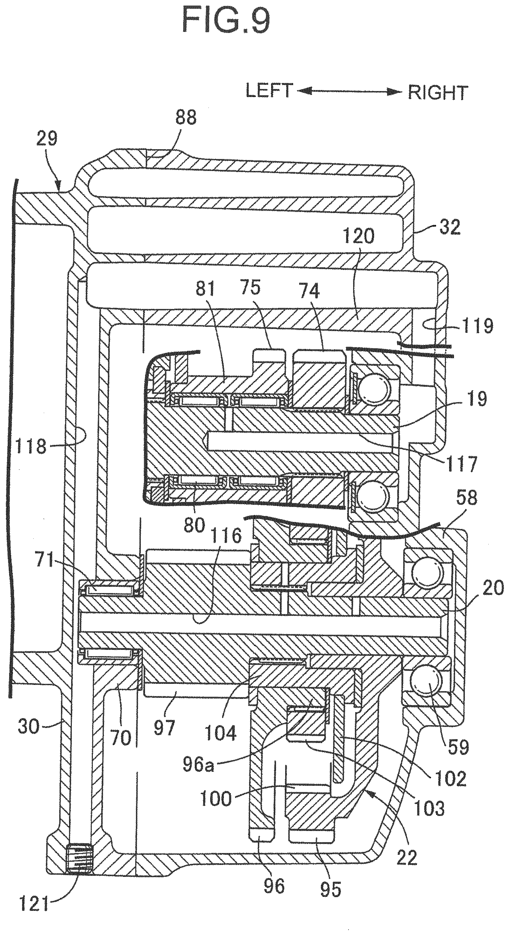

Referring in addition to FIG. 9, the planetary gear mechanism 22 includes the ring gear 100, a plurality of planetary gears 101 that mesh with the ring gear 100, a planetary carrier 102 that rotatably supports these planetary gears 101 and has the output gear 97 synchronously and operatively coupled thereto, and the sun gear 103 that is relatively rotatably supported on the intermediate shaft 20 and meshes with the plurality of planetary gears 101.

The third power transmission gear 95 is formed integrally with the outer periphery of the ring gear 100, the third power transmission gear 95 meshing with the first power transmission gear 74, which is fixed by spline joining. The planetary carrier 102 has a cylindrical boss part 104 that is disposed between the ring gear 100 and the output gear 97 in a direction along the axis of the intermediate shaft 20 and is relatively non-rotatably linked to the intermediate shaft 20 by spline joining, and the fourth power transmission gear 96 is relatively rotatably supported on the outer periphery of the boss part 104.

The fourth power transmission gear 96 integrally has a cylindrical supported tube portion 96a coaxially surrounding the boss part 104 and extending toward the side opposite to the output gear 97, and as is clearly shown in FIG. 3 and FIG. 7 the entire length in the axial direction of the supported tube portion 96a is rotatably supported on the boss part 104. Therefore, at least part (part in this embodiment) of the boss part 104 is disposed so as to overlap the supported tube portion 96a, which is part of the fourth power transmission gear 96, when viewed from a direction orthogonal to the axis of the intermediate shaft 20, and part of the boss part 104 is disposed at a position corresponding to the supported tube portion 96a in the axial direction of the intermediate shaft 20.

Furthermore, the sun gear 103 is fixed by spline joining to the outer periphery of an end part, on the side opposite to the output gear 97, of the supported tube portion 96a, part (in this embodiment an end part on the side opposite to the output gear 97 of the supported tube portion 96a) of the fourth power transmission gear 96 is disposed so as to overlap the sun gear 103 when viewed from a direction orthogonal to the axis of the intermediate shaft 20, and part of the supported tube portion 96a is disposed at a position corresponding to the sun gear 103 in the axial direction of the intermediate shaft 20.

In such a planetary gear mechanism 22, when the transmission clutch 23 is in the cut-off state, the ring gear 100 is rotated by power transmitted from the first power transmission gear 74 rotating together with the transmission shaft 19 via the third power transmission gear 95, and a force on the side for rotating in a direction opposite to the ring gear 65 acts on the sun gear 103 via the planetary gear 101. This sun gear 103 is linked to the clutch outer 76 of the transmission clutch 23 via the fourth power transmission gear 96 and the second power transmission gear 75, a force for rotating in a direction opposite to the transmission shaft 19 acts on the clutch outer 76, and since the rotation of the clutch outer 76 is restricted by the one-way clutch 84, the sun gear 103 also attains a stationary state. Therefore, each of the planetary gears 101 rotates together with the planetary carrier 102 around the sun gear 103 in the stationary state, and rotational power is transmitted from the planetary carrier 102, which rotates at a rotational speed that is lower than the rotational speed of the transmission shaft 19, to the axle 21 of the rear wheel WR via the output gear 97 and the driven gear 98. That is, the gear position of the mechanical transmission 18 is 'LOW'.

When the rotational speed of the transmission shaft 19 further increases and the transmission clutch 23 attains the connected state, restriction by means of the one-way clutch 84 is released and the clutch outer 76 of the transmission clutch 23 rotates together with the transmission shaft 19, in the planetary gear mechanism 22 the sun gear 103 rotates together with the ring gear 100 in the same direction, the difference in rotation between the gears of the planetary gear mechanism 22 disappears, and the gear position of the mechanical transmission 18 becomes 'HIGH'. Moreover, such switching over of the gear position by means of the mechanical transmission 18 occurs in a state in which the gear ratio of the belt type continuously variable transmission 16 is low.

Furthermore, the relative positions of the planetary gear mechanism 22 and the fourth power transmission gear 96 with respect to the clutch outer 76 in the axial direction of the transmission shaft 19 and the intermediate shaft 20 are set so that parts of the planetary gear mechanism 22 and the fourth power transmission gear 96 overlap the clutch outer 76 of the transmission clutch 23 when viewed from a direction along the axes of the transmission shaft 19 and the intermediate shaft 20, and the relative position of the output gear 97 with respect to the clutch outer 76 in the axial direction of the intermediate shaft 20 and the transmission shaft 19 is set so that at least part of the output gear 97 overlaps the clutch outer 76 when viewed from a direction orthogonal to the axes of the intermediate shaft 20 and the transmission shaft 19.

That is, in FIG. 6, which is a view from a direction along the axes of the transmission shaft 19 and the intermediate shaft 20, the clutch outer 76 is disposed so that the outer periphery thereof transects the planetary gear mechanism 22 as shown by a chain line, and also transects the fourth power transmission gear 96 having the same diameter as that of the third power transmission gear 95 formed integrally with the ring gear 100 of the planetary gear mechanism 22, and the third vertical plane PL3 going through the end face on the belt type continuously variable transmission 16 side of the output gear 97 transects the clutch outer 76.

The output gear 97 is integrally formed, close to the case main body 30, with the intermediate shaft 20 having opposite end parts rotatably supported on the case main body 30 and the gear cover 32, and the fourth power transmission gear 96, the planetary gear mechanism 22 and third power transmission gear 95 are formed so that they can be assembled onto the intermediate shaft 20 from the gear cover 32 side of the intermediate shaft 20. That is, in the planetary gear mechanism 22, since the supported tube portion 96a, which is integral with the fourth power transmission gear 96, is relatively rotatably fitted onto the cylindrical boss part 104 of the planetary carrier 102, the boss part 104 is spline joined to the intermediate shaft 20, the sun gear 103 is spline joined to the supported tube portion 96a, and the ring gear 100 integrally having the third power transmission gear 95 is fitted around the intermediate shaft 20, it is possible to assemble the fourth power transmission gear 96 and the planetary gear mechanism 22, which has the ring gear 100 having the third power transmission gear 95 formed integrally therewith, onto the intermediate shaft 20 from the gear cover 32 side.

Focusing on FIG. 2 and FIG. 3, a front part in the vehicle fore-and-aft direction of a support arm 106 sandwiching the rear wheel WR between itself and the transmission case 29 is fastened to the crankcase 13 of the engine main body 12, and an end part, projecting from a cylindrical spacer 107, of the axle 21 extending through the wheel hub 25 of the rear wheel WR and the spacer 107 disposed between the wheel hub 25 and the support arm 106 is rotatably supported on a rear end part of the support arm 106 via an eighth bearing 108, which is a ball bearing.

A housing recess part 109 housing part of the mechanical transmission 18 is formed in the rear wheel WR on one side in the vehicle width direction (the left side in this embodiment) of the linking part 27, and a disk brake 110 as a rear wheel brake disposed on the other side in the vehicle width direction (the right side in this embodiment) of the linking part 27 is provided on the rear wheel WR.

The first power transmission gear 74 and the planetary gear mechanism 22 are disposed within the housing recess part 109 so as to overlap part of the wheel rim 26 when viewed from a direction orthogonal to the axes of the transmission shaft 19 and the intermediate shaft 20. That is, the first power transmission gear 74 and the planetary gear mechanism 22 are disposed at positions corresponding to part of the wheel rim 26 in the axial direction of the transmission shaft 19 and the intermediate shaft 20, and the first power transmission gear 74 and the planetary gear mechanism 22 are disposed between the wheel hub 25 of the rear wheel WR and a fifth vertical plane PL5 going through the end edge, on the case main body 30 side, of the wheel rim 26 and extending in the vehicle fore-and-aft direction.

Moreover, the wheel hub 25 is formed so as to overlap the wheel rim 26 when viewed from a direction orthogonal to the axis of the axle 21, and a brake disk 111 of the disk brake 110 is mounted on the wheel hub 25 so as to be disposed on said other side in the vehicle width direction (the right side in this embodiment) of the linking part 27. That is, the wheel hub 25 is disposed at a position corresponding to the wheel rim 26 in the axial direction of the axle 21, a sixth vertical plane PL6 going through an end face on the side opposite to the transmission case 29 of the wheel hub 25 goes through the end edge, on the side opposite to the transmission case 29, of the wheel rim 26 in this embodiment, and a seventh vertical plane PL7 going through an end face on the transmission case 29 side of the wheel hub 25 goes through the wheel rim 26 in this embodiment.

A ring-shaped projection 112 coaxial with the axle 21 is projectingly provided integrally with the end face on the side opposite to the transmission case 29 of the wheel hub 25, and the brake disk 111 is fastened to the ring-shaped projection 112 via a plurality of bolts 113.

In this embodiment, a parking drum brake 115 having a brake drum 114 fixed to the spacer 107 is disposed between the wheel hub 25 and a rear end part of the support arm 106, but this drum brake 115 may be omitted.

Focusing on FIG. 4 to FIG. 6 and FIG. 9, a first central oil passage 116 for supplying oil to the planetary gear mechanism 22 and the fifth bearing 71 is coaxially formed in the intermediate shaft 20, the first central oil passage 116 extending along the entire length in the axial direction. Furthermore, a second central oil passage 117 for supplying oil to the seventh bearing 80 is coaxially formed in the transmission shaft 19 in a portion corresponding to at least the mechanical transmission chamber 34 of the transmission shaft 19, and in this embodiment the second central oil passage 117 having one end part opening on an end face on the gear cover 32 side of the transmission shaft 19 is coaxially formed in the transmission shaft 19 while extending up to a portion corresponding to the seventh bearing 80.

A first oil supply passage 118 for supplying oil to the first central oil passage 116 is formed in the case main body 30, a second oil supply passage 119 for supplying oil to the second central oil passage 117 is formed in the gear cover 32, and the first and second oil supply passages 118 and 119 are disposed in parallel to the mating face 88 of the case main body 30 and the gear cover 32.

Oil that has collected within the mechanical transmission chamber 34 is stirred by means of the first and second power transmission gears 74 and 75 coaxially disposed on the transmission shaft 19 and the third and fourth power transmission gears 95 and 96 coaxially disposed on the intermediate shaft 20 and is scattered within the mechanical transmission chamber 34, but a gutter part 120 that receives oil stirred upward by means of the first and second power transmission gears 74 and 75 is formed on the case main body 30 and the gear cover 32 in a portion corresponding to above the intermediate shaft 20, and upper end parts of the first and second oil supply passages 118 and 119 communicate with opposite end parts in the longitudinal direction of the gutter part 120.

The first oil supply passage 118 extends up and down so as to pass through the fifth bearing housing 70 and communicates with the first central oil passage 116, and an opening part at the lower end of the first oil supply passage 118 is closed with a plug member 121 screwed into the case main body 30. Furthermore, the second oil supply passage 119 is formed in the gear cover 32 so as to be inclined downward to the front from the gutter part 120 so that its lower end part opens within the first bearing housing 56 and communicates with the second central oil passage 117.

The operation of this embodiment is now explained; the power transmission device T includes the belt type continuously variable transmission 16 provided between the engine E and the transmission shaft 19 while enabling the rotational speed of the power from the engine E to be steplessly changed, and the mechanical transmission 18 disposed between the axle 21 of the rear wheel WR and the transmission shaft 19 and including the planetary gear mechanism 22 and the transmission clutch 23 switching over the gear position of the planetary gear mechanism 22, the second power transmission gear 75 rotating together with the clutch outer 76 of the transmission clutch 23 is coaxially disposed on the transmission shaft 19, the first power transmission gear 74 is fixedly provided on the transmission shaft 19, and the planetary gear mechanism 22 having the ring gear 100 rotating together with the third power transmission gear 95 meshing with the first power transmission gear 74 is coaxially disposed on the intermediate shaft 20 having an axis parallel to the transmission shaft 19. On the other hand, the housing recess part 109 housing part of the mechanical transmission 18 on one side in the vehicle width direction of the linking part 27 is formed in the rear wheel WR equipped with the linking part 27 linking the wheel hub 25 and the wheel rim 26 having the tire 28 mounted thereon, the disk brake 110, which is a rear wheel brake, disposed on the other side in the vehicle width direction of the linking part 27 is provided on the rear wheel WR, and the first power transmission gear 74 and the planetary gear mechanism 22 are disposed within the housing recess part 109 so as to overlap part of the wheel rim 26 when viewed from a direction orthogonal to the axes of the transmission shaft 19 and the intermediate shaft 20. It is therefore possible to form the housing recess part 109 with a large size, and it is possible to suppress outward projection, in the vehicle width direction, of the power transmission device T from the rear wheel WR by disposing the first power transmission gear 74 and the planetary gear mechanism 22, which overlap part of the wheel rim 26 when viewed from a direction orthogonal to the axes of the transmission shaft 19 and the intermediate shaft 20, within the housing recess part 109, and to reduce the dimension in the vehicle width direction.

Furthermore, since the wheel hub 25 is formed so as to overlap the wheel rim 26 when viewed from a direction orthogonal to the axis of the axle 21 of the rear wheel WR, it is possible to dispose the wheel rim 26 and the wheel hub 25 close to each other in a direction along the axis of the axle 21, thus ensuring that the wheel is sufficiently rigid, and it is also possible to suppress projection of the wheel hub 25 toward the other side in the vehicle width direction, thus improving the appearance of the wheel. Moreover, since the brake disk 111 of the disk brake 110 is mounted on the wheel hub 25 so as to be disposed on the other side in the vehicle width direction of the linking part 27, it is possible to prevent the disk brake 111 from interfering with the power transmission device T disposed on one side in the vehicle width direction of the linking part 27, thus enabling the power transmission device T to be efficiently disposed close to the rear wheel WR side and making it easy to mount the disk brake 111.

Furthermore, since part of the transmission case 29 housing the belt type continuously variable transmission 16 and the mechanical transmission 18 is formed from the case main body 30 extending in the vehicle fore-and-aft direction on one side of the rear wheel WR and the gear cover 32 fastened to the case main body 30 so as to cover part of the case main body 30 from the rear wheel WR side while forming the mechanical transmission chamber 34 housing the mechanical transmission 18 between the gear cover 32 and the case main body 30, an end part on the gear cover 32 side of the transmission shaft 19 is rotatably supported on the gear cover 32 via the first bearing 57, an end part on the gear cover 32 side of the intermediate shaft 20 is rotatably supported on the gear cover 32 via the second bearing 59, the third bearing 62 is disposed between the gear cover 32 and the axle 21 rotatably extending through the gear cover 32, and the end part on the rear wheel WR side of the second bearing 59 is disposed further toward the rear wheel WR side than the end parts on the side opposite to the rear wheel WR of the first and third bearings 57 and 62, it is possible to dispose the planetary gear mechanism 22 and the fourth power transmission gear 96, which are disposed coaxially with the intermediate shaft 20, closer to the rear wheel WR side, thus reducing the amount of projection of the power transmission device T from the rear wheel WR toward the outside in the vehicle width direction.

Furthermore, since the transmission clutch 23, the second power transmission gear 75, and the first power transmission gear 74 are disposed so as to be arranged in that order from the belt type continuously variable transmission 16 side in a direction along the axis of the transmission shaft 19, the external diameters D1 and D2 of the first and second power transmission gears 74 and 75 are set smaller than the external diameter DC of the transmission clutch 23, and the clearance recess part 82 having part of the wheel rim 26 disposed therein is formed in the outer face of the gear cover 32 on the radially outer side of the first and second power transmission gears 74 and 75, it is possible to form the large clearance recess part 82 in the outer face of the gear cover 32 on the radially outer side of the first and second power transmission gears 74 and 75, due to the part of the wheel rim 26 being disposed in the clearance recess part 82 it is possible to dispose the power transmission device T closer to the rear wheel WR side, and it is possible to reduce the amount of projection of the power transmission device T from the rear wheel WR toward the outside in the vehicle width direction.

Furthermore, since the output gear 97, the fourth power transmission gear 96, and the planetary gear mechanism 22 are disposed so as to be arranged in that order from the belt type continuously variable transmission 16 side in a direction along the axis of the intermediate shaft 20, and the second power transmission gear 75, the first power transmission gear 74, the fourth power transmission gear 96, and the planetary gear mechanism 22 are disposed further toward the rear wheel WR side than the end part on the belt type continuously variable transmission 16 side of the output gear 97, it is possible to avoid any influence on the positions in a direction along the axis of the first power transmission gear 74, the second power transmission gear 75, the fourth power transmission gear 96, and the planetary gear mechanism 22 even when the width along the axial direction of the output gear 97 is large. Therefore, it is possible to reduce the dimension along the vehicle width direction of the power transmission device T while ensuring the degree of freedom in setting the width along the axial direction of the output gear 97.

Furthermore, since the relative positions of the planetary gear mechanism 22 and the fourth power transmission gear 96 with respect to the clutch outer 76 of the transmission clutch 23 are set so that parts of the planetary gear mechanism 22 and the fourth power transmission gear 96 overlap the clutch outer 76 when viewed from a direction along the axes of the transmission shaft 19 and the intermediate shaft 20, and the relative position of the output gear 97 with respect to the clutch outer 76 is set so that at least part of the output gear 97 overlaps the clutch outer 76 when viewed from a direction orthogonal to the axes of the intermediate shaft 20 and the transmission shaft 19, it is possible to reduce the dimension of the power transmission device T in the vehicle width direction, it is also possible to reduce the dimension of the power transmission device T in a direction orthogonal to the vehicle width direction, and it is thus possible to further reduce the size of the power transmission device T.

Furthermore, since the restricting member 86 forming the one-way clutch 84 for restricting the direction of rotation of the clutch outer 76 in cooperation with the rotation-preventing member 85 supported on the clutch outer 76 is disposed between the clutch outer 76 and the second power transmission gear 75 in the axial direction of the transmission shaft 19 so as to overlap the output gear 97 when viewed from a direction orthogonal to the axes of the intermediate shaft 20 and the transmission shaft 19, it is possible to efficiently dispose the restricting member 86 of the one-way clutch 84 in a region surrounded by the clutch outer 76, the second power transmission gear 75, and the output gear 97 so that the restricting member 86 is disposed in this region, and it is possible to further reduce the dimension of the power transmission device T in the vehicle width direction.

Furthermore, since the gear cover 32 is fastened to the case main body 30 so as to cover part of the case main body 30 from the rear wheel WR side while supporting, in cooperation with the case main body 30, the restricting member 86 having the collar 87 disposed between itself and the case main body 30, and the mating face 88 of the gear cover 32 and the case main body 30 is disposed on the side opposite to the rear wheel WR with respect to the abutment face 94 of the collar 87 and the restricting member 86, it is possible to suppress the amount of projection, from the transmission case 29 toward the rear wheel WR side, of a fastening boss, etc. for the bolt 93 for fastening the gear cover 32 to the case main body 30, and enabling the mechanical transmission 18 to be disposed closer to the rear wheel WR side enables the power transmission device T and the rear wheel WR to be disposed more compactly in the vehicle width direction. Moreover, due to the collar 87 being disposed between the restricting member 86 and the case main body 30, the restricting member 86 is supported on the position spaced in the vehicle width direction with respect to the mating face 88 of the gear cover 32 and the case main body 30, and it is possible to ensure the degree of freedom in disposing the restricting member 86 in the vehicle width direction.

Furthermore, since the clutch inner 77 of the transmission clutch 23 is relatively non-rotatably joined to the transmission shaft 19, the clutch outer 76 is relatively rotatably supported on the transmission shaft 19, and part of the fourth power transmission gear 96 is disposed so as to overlap at least part of the sun gear 103 of the planetary gear mechanism 22 when viewed from a direction orthogonal to the axis of the intermediate shaft 20, it is possible to dispose the sun gear 103 and the fourth power transmission gear 96 together in a compact manner in a direction along the axis of the intermediate shaft 20.

Furthermore, since the cylindrical boss part 104 relatively non-rotatably joined to the intermediate shaft 20 is provided integrally with the planetary carrier 102 of the planetary gear mechanism 22, and the fourth power transmission gear 96 overlapping at least part of the boss part 104 when viewed from a direction orthogonal to the axis of the intermediate shaft 20 is relatively rotatably supported on the outer periphery of the boss part 104, it is possible to dispose the planetary carrier 102 and the fourth power transmission gear 96 together in a compact manner in a direction along the axis of the intermediate shaft 20.

Furthermore, since the output gear 97 is formed, close to the case main body 30, integrally with the intermediate shaft 20 having opposite end parts rotatably supported on the case main body 30 and the gear cover 32, and the fourth power transmission gear 96, the planetary gear mechanism 22, and the third power transmission gear 95 are formed so that they can be assembled onto the intermediate shaft 20 from an end part on the gear cover 32 side of the intermediate shaft 20, it becomes easy to assemble the fourth power transmission gear 96, the planetary gear mechanism 22, and the third power transmission gear 96 onto the intermediate shaft 20 integrally having the output gear 97.

Furthermore, since the bulge part 65 bulging toward the belt type continuously variable transmission chamber 33 housing the belt type continuously variable transmission 16 is formed on the case main body 30, the fourth bearing 67 is disposed between the bulge part 65 and the transmission shaft 19 extending through the bulge part 65, and the follower pulley 39 is supported on the transmission shaft 19 within the belt type continuously variable transmission chamber 33 so that at least part of the fourth bearing 67 overlaps part of the follower pulley 39 forming part of the belt type continuously variable transmission 16 when viewed from a direction orthogonal to the axis of the transmission shaft 19, it is possible, by forming the belt type continuously variable transmission chamber 33 and the mechanical transmission chamber 34 together in a compact manner in the axial direction of the transmission shaft 19 due to part of the mechanical transmission chamber 34 bulging toward the belt type continuously variable transmission chamber 33 side, to further reduce the dimension of the power transmission device T in the vehicle width direction.

Furthermore, since the transmission shaft 19 and the intermediate shaft 20 are rotatably supported on the case main body 30 and the gear cover 32, the first oil supply passage 118 for supplying oil to the first central oil passage 116 coaxially formed in the intermediate shaft 20 is formed in the case main body 30, the second oil supply passage 119 for supplying oil to the second central oil passage 117 coaxially formed in at least a portion, corresponding to the mechanical transmission chamber 34, of the transmission shaft 19 is formed in the gear cover 32, and the first and second oil supply passages 118 and 119 are disposed in parallel to the mating face 88 of the case main body 30 and the gear cover 32, when forming the first and second oil supply passages 118 and 119 it is possible to suppress projection of portions where the oil supply passages 118 and 119 are formed from the transmission case 29 in the vehicle width direction, thus further reducing the dimension of the power transmission device T in the vehicle width direction.

An embodiment of the present invention is explained above, but the present invention is not limited to the above-mentioned embodiment and may be modified in a variety of ways as long as the modifications do not depart from the scope of the claims of the invention.

### DESCRIPTION OF REFERENCE NUMERALS AND SYMBOLS

- 16: belt type continuously variable transmission
- 18: mechanical transmission
- 19: transmission shaft
- 20: intermediate shaft
- 21: axle
- 22: planetary gear mechanism
- 23: transmission clutch
- 25: wheel hub
- 26: wheel rim
- 27: linking part
- 28: tire
- 29: transmission case
- 30: case main body
- 31: cover member
- 32: gear cover
- 33: belt type continuously variable transmission chamber
- 34: mechanical transmission chamber
- 39: follower pulley
- 57: first bearing
- 59: second bearing
- 62: third bearing
- 65: bulge part
- 67: fourth bearing
- 74: first power transmission gear
- 75: second power transmission gear
- 76: clutch outer
- 77: clutch inner
- 82: clearance recess part
- 84: one-way clutch
- 85: rotation-preventing member
- 86: restricting member
- 87: collar
- 88: mating face
- 94: abutment face
- 95: third power transmission gear
- 96: fourth power transmission gear
- 97: output gear
- 100: ring gear
- 101: planetary gear
- 102: planetary carrier
- 103: sun gear
- 104: boss part
- 109: housing recess part
- 110: disk brake as rear wheel brake
- 111: brake disk
- 116: first central oil passage
- 117: second central oil passage
- 118: first oil supply passage
- 119: second oil supply passage
- D1: external diameter of first power transmission gear
- D2: external diameter of second power transmission gear
- DC: external diameter of transmission clutch
- E: engine as power source
- T: power transmission device
- WR: rear wheel

## Claims

1. A power transmission device for a saddle-ridden vehicle, comprising a belt type continuously variable transmission (16) that is provided between a power source (E) and a transmission shaft (19) so as to enable a rotational speed of power from the power source (E) to be steplessly changed, and a mechanical transmission (18) that is disposed between the transmission shaft (19) and an axle (21) of a rear wheel (WR) equipped with a rear wheel brake (110) and comprises a planetary gear mechanism (22) and a transmission clutch (23) for switching over a gear position of the planetary gear mechanism (22),
wherein the transmission clutch (23) and a second power transmission gear (75) rotating together with a clutch outer (76) of the transmission clutch (23) are coaxially disposed on the transmission shaft (19), a first power transmission gear (74) is fixedly provided on the transmission shaft (19), the planetary gear mechanism (22), a third power transmission gear (95) meshing with the first power transmission gear (74) so as to rotate together with a ring gear (100) of the planetary gear mechanism (22), and a fourth power transmission gear (96) meshing with the second power transmission gear (75) so as to rotate together with a sun gear (103) of the planetary gear mechanism (22) are coaxially disposed on an intermediate shaft (20) having an axis parallel to the transmission shaft (19), an output gear (97) transmitting power to the axle (21) is fixedly provided on the intermediate shaft (20), the rear wheel (WR) is formed so as to have a wheel hub (25) supported on the axle (21), a wheel rim (26) surrounding the wheel hub (25) so as to have a tire (28) mounted thereon, and a linking part (27) providing a link between the wheel hub (25) and the wheel rim (26), and the belt type continuously variable transmission (16) is disposed so as to sandwich the mechanical transmission (18) between the belt type continuously variable transmission (16) and the linking part (27) in a vehicle width direction,
**characterized in that**
a housing recess part (109) housing part of the mechanical transmission (18) on one side in the vehicle width direction of the linking part (27) is formed in the rear wheel (WR), a rear wheel brake (110) disposed on an other side in the vehicle width direction of the linking part (27) is provided on the rear wheel (WR), and the first power transmission gear (74) and the planetary gear mechanism (22) are disposed within the housing recess part (109) so as to overlap part of the wheel rim (26) when viewed from a direction orthogonal to an axis of the transmission shaft (19) and the axis of the intermediate shaft (20).

2. The power transmission device for a saddle-ridden vehicle according to Claim 1, wherein the wheel hub (25) is formed so as to overlap the wheel rim (26) when viewed from a direction orthogonal to an axis of the axle (21), and a brake disk (111) of a disk brake (110), which is the rear wheel brake, is mounted on the wheel hub (25) so as to be disposed on said other side in the vehicle width direction of the linking part (27).

3. The power transmission device for a saddle-ridden vehicle according to Claim 1, further comprising a transmission case (29) housing the belt type continuously variable transmission (16) and the mechanical transmission (18),
wherein the transmission case (29) comprises a case main body (30) that extends in a vehicle fore-and-aft direction on one side of the rear wheel (WR), a cover member (31) that forms a belt type continuously variable transmission chamber (33) housing the belt type continuously variable transmission (16) between the cover member (31) and the case main body (30) and is fastened to the case main body (30) from a side opposite to the rear wheel (WR), and a gear cover (32) that, while forming a mechanical transmission chamber (34) housing the mechanical transmission (18) between the gear cover (32) and the case main body (30), is fastened to the case main body (30) so as to cover part of the case main body (30) from the rear wheel (WR) side, an end part on the gear cover (32) side of the transmission shaft (19) is rotatably supported on the gear cover (32) via a first bearing (57), an end part on the gear cover (32) side of the intermediate shaft (20) is rotatably supported on the gear cover (32) via a second bearing (59), a third bearing (62) is disposed between the gear cover (32) and the axle (21) extending rotatably through the gear cover (32), and an end part on the rear wheel (WR) side of the second bearing (59) is disposed further on the rear wheel (WR) side than end parts on a side opposite to the rear wheel (WR) of the first and third bearings (57, 62).

4. The power transmission device for a saddle-ridden vehicle according to Claim 1, further comprising a transmission case (29) housing the belt type continuously variable transmission (16) and the mechanical transmission (18),
wherein the transmission case (29) comprises a case main body (30) that extends in a vehicle fore-and-aft direction on one side of the rear wheel (WR), a cover member (31) that forms a belt type continuously variable transmission chamber (33) housing the belt type continuously variable transmission (16) between the cover member (31) and the case main body (30) and is fastened to the case main body (30) from a side opposite to the rear wheel (WR), and a gear cover (32) that, while forming a mechanical transmission chamber (34) housing the mechanical transmission (18) between the gear cover (32) and the case main body (30), is fastened to the case main body (30) so as to cover part of the case main body (30) from the rear wheel (WR) side, the transmission clutch (23), the second power transmission gear (75), and the first power transmission gear (74) are disposed so as to be arranged in that order from the belt type continuously variable transmission (16) side in a direction along the axis of the transmission shaft (19), external diameters (D1, D2) of the first and second power transmission gears (74, 75) are set smaller than an external diameter (DC) of the transmission clutch (23), and a clearance recess part (82) is formed in an outer face of the gear cover (32) on a radially outer side of the first and second power transmission gears (74, 75), part of the wheel rim (26) being disposed in the clearance recess part (82).

5. The power transmission device for a saddle-ridden vehicle according to Claim 1, wherein the transmission clutch (23), the second power transmission gear (75), and the first power transmission gear (74) are disposed so as to be arranged in that order from the belt type continuously variable transmission (16) side in a direction along the axis of the transmission shaft (19), the output gear (97), the fourth power transmission gear (96), and the planetary gear mechanism (22) are disposed so as to be arranged in that order from the belt type continuously variable transmission (16) side in a direction along the axis of the intermediate shaft (20), and the second power transmission gear (75), the first power transmission gear (74), the fourth power transmission gear (96), and the planetary gear mechanism (22) are disposed further on the rear wheel (WR) side than an end part on the belt type continuously variable transmission (16) side of the output gear (97).

6. The power transmission device for a saddle-ridden vehicle according to Claim 5, wherein a relative positions of the planetary gear mechanism (22) and the fourth power transmission gear (96) with respect to the clutch outer (76) are set so that parts of the planetary gear mechanism (22) and the fourth power transmission gear (96) overlap the clutch outer (76) when viewed from a direction along the axes of the transmission shaft (19) and the intermediate shaft (20), and a relative position of the output gear (97) with respect to the clutch outer (76) is set so that at least part of the output gear (97) overlaps the clutch outer (76) when viewed from a direction orthogonal to the axes of the intermediate shaft (20) and the transmission shaft (19).

7. The power transmission device for a saddle-ridden vehicle according to Claim 6, wherein a restricting member (86) forming, in cooperation with a rotation-preventing member (85) supported on the clutch outer (76), a one-way clutch (84) for restricting a direction of rotation of the clutch outer (76) is disposed between the clutch outer (76) and the second power transmission gear (75) in an axial direction of the transmission shaft (19) while overlapping the output gear (97) when viewed from a direction orthogonal to the axes of the intermediate shaft (20) and the transmission shaft (19).

8. The power transmission device for a saddle-ridden vehicle according to Claim 7, further comprising a transmission case (29) housing the belt type continuously variable transmission (16) and the mechanical transmission (18),
wherein the transmission case (29) comprises a case main body (30) that extends in a vehicle fore-and-aft direction on one side of the rear wheel (WR), a cover member (31) that forms a belt type continuously variable transmission chamber (33) housing the belt type continuously variable transmission (16) between the cover member (31) and the case main body (30) and is fastened to the case main body (30) from a side opposite to the rear wheel (WR), and a gear cover (32) that forms a mechanical transmission chamber (34) housing the mechanical transmission (18) between the gear cover (32) and the case main body (30), the gear cover (32) is fastened to the case main body (30) so as to cover part of the case main body (30) from the rear wheel (WR) side while supporting, in cooperation with the case main body (30), the restricting member (86) having a collar (87) disposed between the restricting member (86) and the case main body (30), and a mating face (88) of the gear cover (32) and the case main body (30) is disposed on the side opposite to the rear wheel (WR) with respect to an abutment face (94) of the collar (87) and the restricting member (86).

9. The power transmission device for a saddle-ridden vehicle according to Claim 5, wherein a clutch inner (77) of the transmission clutch (23) is relatively non-rotatably joined to the transmission shaft (19), the clutch outer (76) is relatively rotatably supported on the transmission shaft (19), the planetary gear mechanism (22) comprises the ring gear (100) and the sun gear (103), a plurality of planetary gears (101) that mesh with the ring gear (100) and the sun gear (103), and a planetary carrier (102) that rotatably supports the planetary gears (101) and has the output gear (97) synchronously and operatively coupled to the planetary carrier (102), and part of the fourth power transmission gear (96) is disposed so as to overlap at least part of the sun gear (103) when viewed from a direction orthogonal to the axis of the intermediate shaft (20).

10. The power transmission device for a saddle-ridden vehicle according to Claim 5, wherein a clutch inner (77) of the transmission clutch (23) is relatively non-rotatably joined to the transmission shaft (19), the clutch outer (76) is relatively rotatably supported on the transmission shaft (19), the planetary gear mechanism (22) comprises the ring gear (100) and the sun gear (103), a plurality of planetary gears (101) that mesh with the ring gear (100) and the sun gear (103), and a planetary carrier (102) that rotatably supports the planetary gears (101) and has the output gear (97) synchronously and operatively coupled to the planetary carrier (102), a cylindrical boss part (104) joined relatively non-rotatably to the intermediate shaft (20) is provided integrally with the planetary carrier (102), and the fourth power transmission gear (96) overlapping at least part of the boss part (104) when viewed from a direction orthogonal to the axis of the intermediate shaft (20) is relatively rotatably supported on an outer periphery of the boss part (104).

11. The power transmission device for a saddle-ridden vehicle according to Claim 5, wherein part of a transmission case (29) housing the belt type continuously variable transmission (16) and the mechanical transmission (18) is formed from a case main body (30) extending in a vehicle fore-and-aft direction on one side of the rear wheel (WR), and a gear cover (32) forming, between the gear cover (32) and the case main body (30), a mechanical transmission chamber (34) housing the mechanical transmission (18), the output gear (97) is formed, close to the case main body (30), integrally with the intermediate shaft (20) having opposite end parts thereof rotatably supported on the case main body (30) and the gear cover (32), and the fourth power transmission gear (96), the planetary gear mechanism (22), and the third power transmission gear (95) are formed so as to be able to be assembled onto the intermediate shaft (20) from an end part on the gear cover (32) side of the intermediate shaft (20).

12. The power transmission device for a saddle-ridden vehicle according to Claim 5, further comprising a transmission case (29) housing the belt type continuously variable transmission (16) and the mechanical transmission (18),
wherein the transmission case (29) comprises a case main body (30) that extends in a vehicle fore-and-aft direction on one side of the rear wheel (WR), a cover member (31) that forms a belt type continuously variable transmission chamber (33) housing the belt type continuously variable transmission (16) between the cover member (31) and the case main body (30) and is fastened to the case main body (30) from a side opposite to the rear wheel (WR), and a gear cover (32) that, while forming a mechanical transmission chamber (34) housing the mechanical transmission (18) between the gear cover (32) and the case main body (30), is fastened to the case main body (30) so as to cover part of the case main body (30) from the rear wheel (WR) side, a fourth bearing (67) is disposed between a bulge part (65) that is formed on the case main body (30) so as to bulge toward the belt type continuously variable transmission chamber (33) side and the transmission shaft (19) extending through the bulge part (65), and a follower pulley (39) forming part of the belt type continuously variable transmission (16) is supported on the transmission shaft (19) within the belt type continuously variable transmission chamber (33) so that at least part of the fourth bearing (67) overlaps part of the follower pulley (39) when viewed from a direction orthogonal to the axis of the transmission shaft (19).

13. The power transmission device for a saddle-ridden vehicle according to Claim 1, further comprising a transmission case (29) housing the belt type continuously variable transmission (16) and the mechanical transmission (18),
wherein the transmission case (29) comprises a case main body (30) that extends in a vehicle fore-and-aft direction on one side of the rear wheel (WR), a cover member (31) that forms a belt type continuously variable transmission chamber (33) housing the belt type continuously variable transmission (16) between the cover member (31) and the case main body (30) and is fastened to the case main body (30) from a side opposite to the rear wheel (WR), and a gear cover (32) that, while forming a mechanical transmission chamber (34) housing the mechanical transmission (18) between the gear cover (32) and the case main body (30), is fastened to the case main body (30) so as to cover part of the case main body (30) from the rear wheel (WR) side, the transmission shaft (19) and the intermediate shaft (20) are rotatably supported on the case main body (30) and the gear cover (32), a first oil supply passage (118) for supplying oil to a first central oil passage (116) coaxially formed in the intermediate shaft (20) is formed in the case main body (30), a second oil supply passage (119) for supplying oil to a second central oil passage (117) coaxially formed in at least a part of the transmission shaft (19) that corresponds to the mechanical transmission chamber (34) is formed in the gear cover (32), and the first and second oil supply passages (118, 119) are disposed in parallel to a mating face (88) of the case main body (30) and the gear cover (32).

## Patentansprüche

1. Leistungsübertragungsvorrichtung für ein Sattelfahrzeug, umfassend eine gurtförmige kontinuierlich variable Übertragung (16), die zwischen einer Leistungsquelle (E) und einer Übertragungswelle (19) derart vorgesehen ist, dass eine stufenlose Veränderung einer Drehgeschwindigkeit einer Leistung von der Leistungsquelle (E) ermöglicht wird, und eine mechanische Übertragung (18), die zwischen der Übertragungswelle (19) und einer Achse (21) eines Hinterrads (WR) angeordnet ist, das mit einer Hinterradbremse (110) ausgestattet ist, und einen Planetengetriebemechanismus (22) und eine Übertragungskupplung (23) umfasst zum Umschalten einer Getriebeposition des Planetengetriebemechanismus (22),
wobei die Übertragungskupplung (23) und ein zweites Leistungsübertragungszahnrad (75), das zusammen mit einem Kupplungsaußenteil (76) der Übertragungskupplung (23) rotiert, koaxial auf der Übertragungswelle (19) angeordnet sind, wobei ein erstes Leistungsübertragungszahnrad (74) fest auf der Übertragungswelle (19) vorgesehen ist, wobei der Planetengetriebemechanismus (22), ein drittes Leistungsübertragungszahnrad (95), das mit dem ersten Leistungsübertragungszahnrad (74) kämmt, um zusammen mit einem Ringzahnrad (100) des Planetengetriebemechanismus (22) zu rotieren, und ein viertes Leistungsübertragungszahnrad (96), das mit dem zweiten Leistungsübertragungszahnrad (75) kämmt, um zusammen mit einem Sonnenrad (103) des Planetengetriebemechanismus (22) zu rotieren, koaxial auf einer Zwischenwelle (20) angeordnet sind, die eine Achse parallel zur Übertragungswelle (19) hat, wobei ein Ausgangszahnrad (97), das Leistung zur Achse (21) überträgt, fest auf der Zwischenwelle (20) vorgesehen ist, wobei das Hinterrad (WR) derart gebildet ist, dass es eine auf der Achse (21) getragene Radnabe (25) hat, wobei ein Radrand (26) die Radnabe (25) derart umgibt, dass ein Reifen (28) darauf montiert ist, und wobei ein Verbindungsteil (27) eine Verbindung zwischen der Radnabe (25) und dem Radrand (26) bereitstellt, und wobei die gurtförmige kontinuierlich variable Übertragung (16) derart angeordnet ist, dass die mechanische Übertragung (18) zwischen der gurtförmigen kontinuierlich variablen Übertragung (16) und dem Verbindungsteil (27) in einer Fahrzeugbreitenrichtung eingefügt ist,
**dadurch gekennzeichnet, dass**
ein Gehäuseaussparungsteil (109), das einen Teil der mechanischen Übertragung (18) an einer Seite in der Fahrzeugbreitenrichtung des Verbindungsteils (27) aufnimmt, im Hinterrad (WR) gebildet ist, eine Hinterradbremse (110), die an einer anderen Seite in der Fahrzeugbreitenrichtung des Verbindungsteils (27) angeordnet ist, an dem Hinterrad (WR) vorgesehen ist, und das erste Leistungsübertragungszahnrad (74) und der Planetengetriebemechanismus (22) innerhalb des Gehäuseaussparungsteils (109) derart angeordnet sind, dass sie bei Betrachtung aus einer Richtung orthogonal zu einer Achse der Übertragungswelle (19) und der Achse der Zwischenwelle (20) einen Teil des Radrands (26) überlappen.

2. Leistungsübertragungsvorrichtung für ein Sattelfahrzeug nach Anspruch 1, wobei die Radnabe (25) derart gebildet ist, dass sie bei Betrachtung aus einer Richtung orthogonal zu einer Achse der Achse (21) den Radrand (26) überlappt, und wobei eine Bremsscheibe (111) einer Scheibenbremse (110), die die Hinterradbremse ist, an der Radnabe (25) derart montiert ist, dass sie an der anderen Seite in der Fahrzeugbreitenrichtung des Verbindungsteils (27) angeordnet ist.

3. Leistungsübertragungsvorrichtung für ein Sattelfahrzeug nach Anspruch 1, ferner umfassend ein Übertragungsgehäuse (29), das die gurtförmige kontinuierlich variable Übertragung (16) und die mechanische Übertragung (18) aufnimmt,
wobei das Übertragungsgehäuse (29) einen Gehäusehauptkörper (30) umfasst, der sich in einer Vorne-Hinten-Richtung des Fahrzeugs an einer Seite des Hinterrads (WR) erstreckt, ein Abdeckelement (31), das eine Kammer (33) der gurtförmigen kontinuierlich variablen Übertragung bildet, die die gurtförmige kontinuierlich variable Übertragung (16) zwischen dem Abdeckelement (31) und dem Gehäusehauptkörper (30) aufnimmt und an dem Gehäusehauptkörper (30) von einer Seite entgegengesetzt zum Hinterrad (WR) befestigt ist, sowie eine Zahnradabdeckung (32), die eine Kammer (34) der mechanischen Übertragung bildet, die die mechanische Übertragung (18) zwischen der Zahnradabdeckung (32) und dem Gehäusehauptkörper (30) aufnimmt und an dem Gehäusehauptkörper (30) derart befestigt ist, dass ein Teil des Gehäusehauptkörpers (30) von der Seite des Hinterrads (WR) abgedeckt wird, wobei ein Endteil an der Seite der Zahnradabdeckung (32) der Übertragungswelle (19) drehbar an der Zahnradabdeckung (32) mittels eines ersten Lagers (57) getragen ist, ein Endteil an der Seite der Zahnradabdeckung (32) der Zwischenwelle (20) drehbar an der Zahnradabdeckung (32) mittels eines zweiten Lagers (59) getragen ist, ein drittes Lager (62) zwischen der Zahnradabdeckung (32) und der Achse (21) angeordnet ist, die sich drehbar durch die Zahnradabdeckung (32) erstreckt, und ein Endteil an der Seite des Hinterrads (WR) des zweiten Lagers (59) weiter an der Seite des Hinterrads (WR) angeordnet ist als Endteile an einer Seite entgegengesetzt zum Hinterrad (WR) des ersten und des dritten Lagers (57, 62).

4. Leistungsübertragungsvorrichtung für ein Sattelfahrzeug nach Anspruch 1, ferner umfassend ein Übertragungsgehäuse (29), das die gurtförmige kontinuierlich variable Übertragung (16) und die mechanische Übertragung (18) aufnimmt,
wobei das Übertragungsgehäuse (29) einen Gehäusehauptkörper (30) umfasst, der sich in einer Vorne-Hinten-Richtung des Fahrzeugs an einer Seite des Hinterrads (WR) erstreckt, ein Abdeckelement (31), das eine Kammer (33) der gurtförmigen kontinuierlich variablen Übertragung bildet, die die gurtförmige kontinuierlich variable Übertragung (16) zwischen dem Abdeckelement (31) und dem Gehäusehauptkörper (30) aufnimmt und an dem Gehäusehauptkörper (30) von einer Seite entgegengesetzt zum Hinterrad (WR) befestigt ist, sowie eine Zahnradabdeckung (32), die eine Kammer (34) der mechanischen Übertragung bildet, die die mechanische Übertragung (18) zwischen der Zahnradabdeckung (32) und dem Gehäusehauptkörper (30) aufnimmt und an dem Gehäusehauptkörper (30) derart befestigt ist, dass ein Teil des Gehäusehauptkörpers (30) von der Seite des Hinterrads (WR) abgedeckt wird, wobei die Übertragungskupplung (23), das zweite Leistungsübertragungszahnrad (75), und das erste Leistungsübertragungszahnrad (74) derart angeordnet sind, dass sie in dieser Reihenfolge angeordnet sind von der Seite der gurtförmigen kontinuierlich variablen Übertragung (16) in einer Richtung entlang der Achse der Übertragungswelle (19), wobei Außendurchmesser (D1, D2) des ersten und des zweiten Leistungsübertragungszahnrads (74, 75) kleiner eingestellt sind als ein Außendurchmesser (DC) der Übertragungskupplung (23), und wobei ein Freiraumaussparungsteil (82) in einer Außenfläche der Zahnradabdeckung (32) an einer radial äußeren Seite des ersten und des zweiten Leistungsübertragungszahnrads (74, 75) gebildet ist, wobei ein Teil des Radrands (26) in dem Freiraumaussparungsteil (82) angeordnet ist.

5. Leistungsübertragungsvorrichtung für ein Sattelfahrzeug nach Anspruch 1, wobei die Übertragungskupplung (23), das zweite Leistungsübertragungszahnrad (75) und das erste Leistungsübertragungszahnrad (74) derart angeordnet sind, dass sie in dieser Reihenfolge angeordnet sind von der Seite der gurtförmigen kontinuierlich variablen Übertragung (16) in einer Richtung entlang der Achse der Übertragungswelle (19), wobei das Ausgangszahnrad (97), das vierte Leistungsübertragungszahnrad (96) und der Planetengetriebemechanismus (22) derart angeordnet sind, dass sie in dieser Reihenfolge von der Seite der gurtförmigen kontinuierlich variablen Übertragung (16) in einer Richtung entlang der Achse der Zwischenwelle (20) angeordnet sind, und wobei das zweite Leistungsübertragungszahnrad (75), das erste Leistungsübertragungszahnrad (74), das vierte Leistungsübertragungszahnrad (96) und der Planetengetriebemechanismus (22) weiter an der Seite des Hinterrads (WR) angeordnet sind als ein Endteil an der Seite der gurtförmig kontinuierlich variablen Übertragung (16) des Ausgangszahnrads (97).

6. Leistungsübertragungsvorrichtung für ein Sattelfahrzeug nach Anspruch 5, wobei Relativpositionen des Planetengetriebemechanismus (22) und des vierten Leistungsübertragungszahnrads (96) bezüglich des Kupplungsaußenteils (76) derart eingestellt sind, dass Teile des Planetengetriebemechanismus (22) und des vierten Leistungsübertragungszahnrads (96) bei Betrachtung aus einer Richtung entlang der Achsen der Übertragungswelle (19) und der Zwischenwelle (20) das Kupplungsaußenteil (76) überlappen, und wobei eine Relativposition des Ausgangszahnrads (97) bezüglich des Kupplungsaußenteils (76) derart eingestellt ist, dass wenigstens ein Teil des Ausgangszahnrads (97) bei Betrachtung aus einer Richtung orthogonal zu den Achsen der Zwischenwelle (20) und der Übertragungswelle (19) das Kupplungsaußenteil (76) überlappt.

7. Leistungsübertragungsvorrichtung für ein Sattelfahrzeug nach Anspruch 6, wobei ein Beschränkungselement (86), das in Zusammenwirkung mit einem Rotationsverhinderungselement (85), welches an dem Kupplungsaußenteil (76) getragen ist, einen Freilauf (84) zur Beschränkung einer Rotationsrichtung des Kupplungsaußenteils (76) bildet, zwischen dem Kupplungsaußenteil (76) und dem zweiten Leistungsübertragungszahnrad (75) in einer Axialrichtung der Übertragungswelle (19) angeordnet ist und das Ausgangszahnrad (97) bei Betrachtung aus einer Richtung orthogonal zu den Achsen der Zwischenwelle (20) und der Übertragungswelle (19) überlappt.

8. Leistungsübertragungsvorrichtung für ein Sattelfahrzeug nach Anspruch 7, ferner umfassend ein Übertragungsgehäuse (29), das die gurtförmige kontinuierlich variable Übertragung (16) und die mechanische Übertragung (18) aufnimmt,
wobei das Übertragungsgehäuse (29) einen Gehäusehauptkörper (30) umfasst, der sich in einer Vorne-Hinten-Richtung des Fahrzeugs an einer Seite des Hinterrads (WR) erstreckt, ein Abdeckelement (31), das eine Kammer (33) der gurtförmigen kontinuierlich variablen Übertragung bildet, die die gurtförmige kontinuierlich variable Übertragung (16) zwischen dem Abdeckelement (31) und dem Gehäusehauptkörper (30) aufnimmt und an dem Gehäusehauptkörper (30) von einer Seite entgegengesetzt zum Hinterrad (WR) befestigt ist, sowie eine Zahnradabdeckung (32), die eine Kammer (34) der mechanischen Übertragung bildet, die die mechanische Übertragung (18) zwischen der Zahnradabdeckung (32) und dem Gehäusehauptkörper (30) aufnimmt, wobei die Zahnradabdeckung (32) an dem Gehäusehauptkörper (30) derart befestigt ist, dass ein Teil des Gehäusehauptkörpers (30) von der Seite des Hinterrads (WR) abgedeckt wird, und in Zusammenwirken mit dem Gehäusehauptkörper (30) das Beschränkungselement (86) trägt, das einen Kragen (87) hat, der zwischen dem Beschränkungselement (86) und dem Gehäusehauptkörper (30) angeordnet ist, und wobei eine passende Fläche (88) der Zahnradabdeckung (32) und des Gehäusehauptkörpers (30) an der Seite entgegengesetzt zum Hinterrad (WR) bezüglich einer Anschlagfläche (94) des Kragens (87) und des Beschränkungselements (86) angeordnet ist.

9. Leistungsübertragungsvorrichtung für ein Sattelfahrzeug nach Anspruch 5, wobei ein Kupplungsinnenteil (77) der Übertragungskupplung (23) relativ nicht-drehbar mit der Übertragungswelle (19) verbunden ist, wobei das Kupplungsaußenteil (76) relativ drehbar an der Übertragungswelle (19) getragen ist, wobei der Planetengetriebemechanismus (22) das Ringrad (100) und das Sonnenrad (103) umfasst, eine Mehrzahl von Planetenrädern (101), die mit dem Ringrad (100) und dem Sonnenrad (103) kämmen, und einen Planetenträger (102), der die Planetenräder (101) drehbar trägt und bei dem das Ausgangszahnrad (97) synchron und betriebsmäßig mit dem Planetenträger (102) gekoppelt ist, und wobei ein Teil des vierten Leistungsübertragungszahnrads (96) derart angeordnet ist, dass er bei Betrachtung aus einer Richtung orthogonal zur Achse der Zwischenwelle (20) wenigstens einen Teil des Sonnenrads (103) überlappt.

10. Leistungsübertragungsvorrichtung für ein Sattelfahrzeug nach Anspruch 5, wobei ein Kupplungsinnenteil (77) der Übertragungskupplung (23) relativ nicht-drehbar mit der Übertragungswelle (19) verbunden ist, wobei das Kupplungsaußenteil (76) relativ drehbar an der Übertragungswelle (19) getragen ist, wobei der Planetengetriebemechanismus (22) das Ringrad (100) und das Sonnenrad (103) umfasst, eine Mehrzahl von Planetenrädern (101), die mit dem Ringrad (100) und dem Sonnenrad (103) kämmen, und einen Planetenträger (102), der die Planetenräder (101) drehbar trägt und bei dem das Ausgangszahnrad (97) synchron und betriebsmäßig mit dem Planetenträger (102) gekoppelt ist, wobei ein zylindrisches Radnabenteil (104), das relativ nicht-drehbar mit der Zwischenwelle (20) verbunden ist, integral mit dem Planetenträger (102) vorgesehen ist, und wobei das vierte Leistungsübertragungszahnrad (96), das bei Betrachtung aus einer Richtung orthogonal zur Achse der Zwischenwelle (20) wenigstens einen Teil des Radnabenteils (104) überlappt, relativ drehbar an einem Außenumfang des Radnabenteils (104) getragen ist.

11. Leistungsübertragungsvorrichtung für ein Sattelfahrzeug nach Anspruch 5, wobei ein Teil eines Übertragungsgehäuses (29), das die gurtförmige kontinuierlich variable Übertragung (16) und die mechanische Übertragung (18) aufnimmt, von einem Gehäusehauptkörper(30) mit einer Erstreckung in einer Vorne-Hinten-Richtung des Fahrzeugs an einer Seite des Hinterrads (WR) gebildet ist, und wobei eine Zahnradabdeckung (32) zwischen der Zahnradabdeckung (32) und dem Gehäusehauptkörper (30) eine Kammer (34) der mechanischen Übertragung bildet, die die mechanische Übertragung (18) aufnimmt, wobei das Ausgangszahnrad (97) nahe dem Gehäusehauptkörper (30) integral mit der Zwischenwelle (20) gebildet ist, wobei entgegengesetzte Endteile davon drehbar am Gehäusehauptkörper (30) und der Zahnradabdeckung (32) getragen sind, und wobei das vierte Leistungsübertragungszahnrad (96), der Planetengetriebemechanismus (22) und das dritte Leistungsübertragungszahnrad (95) derart gebildet sind, dass sie auf der Zwischenwelle (20) von einem Endteil an der Seite der Zahnradabdeckung (32) der Zwischenwelle (20) zusammengebaut werden können.

12. Leistungsübertragungsvorrichtung für ein Sattelfahrzeug nach Anspruch 5, ferner umfassend ein Übertragungsgehäuse (29), das die gurtförmige kontinuierlich variable Übertragung (16) und die mechanische Übertragung (18) aufnimmt,
wobei das Übertragungsgehäuse (29) einen Gehäusehauptkörper (30) umfasst, der sich in einer Vorne-Hinten-Richtung des Fahrzeugs an einer Seite des Hinterrads (WR) erstreckt, ein Abdeckelement (31), das eine Kammer (33) der gurtförmigen kontinuierlich variablen Übertragung bildet, die die gurtförmige kontinuierlich variable Übertragung (16) zwischen dem Abdeckelement (31) und dem Gehäusehauptkörper (30) aufnimmt und an dem Gehäusehauptkörper (30) von einer Seite entgegengesetzt zum Hinterrad (WR) befestigt ist, sowie eine Zahnradabdeckung (32), die eine Kammer (34) der mechanischen Übertragung bildet, die die mechanische Übertragung (18) zwischen der Zahnradabdeckung (32) und dem Gehäusehauptkörper (30) aufnimmt und an dem Gehäusehauptkörper (30) derart befestigt ist, dass ein Teil des Gehäusehauptkörpers (30) von der Seite des Hinterrads (WR) abgedeckt wird, wobei ein viertes Lager (67) angeordnet ist zwischen einem Ausbuchtungsteil (65), das am Gehäusehauptkörper (30) derart gebildet ist, dass es sich zur Seite der Kammer (33) der gurtförmigen kontinuierlich variablen Übertragung ausbuchtet, und der Übertragungswelle (19), die sich durch das Ausbuchtungsteil (65) erstreckt, wobei eine Folgerscheibe (39), die einen Teil der gurtförmig kontinuierlich variablen Übertragung (16) bildet, an der Übertragungswelle (19) innerhalb der Kammer (33) der gurtförmig kontinuierlich variablen Übertragung derart getragen ist, dass wenigstens ein Teil des vierten Lagers (67) bei Betrachtung aus einer Richtung orthogonal zur Achse der Übertragungswelle (19) einen Teil der Folgerscheibe (39) überlappt.

13. Leistungsübertragungsvorrichtung für ein Sattelfahrzeug nach Anspruch 1, ferner umfassend ein Übertragungsgehäuse (29), das die gurtförmige kontinuierlich variable Übertragung (16) und die mechanische Übertragung (18) aufnimmt,
wobei das Übertragungsgehäuse (29) einen Gehäusehauptkörper (30) umfasst, der sich in einer Vorne-Hinten-Richtung des Fahrzeugs an einer Seite des Hinterrads (WR) erstreckt, ein Abdeckelement (31), das eine Kammer (33) der gurtförmigen kontinuierlich variablen Übertragung bildet, die die gurtförmige kontinuierlich variable Übertragung (16) zwischen dem Abdeckelement (31) und dem Gehäusehauptkörper (30) aufnimmt und an dem Gehäusehauptkörper (30) von einer Seite entgegengesetzt zum Hinterrad (WR) befestigt ist, sowie eine Zahnradabdeckung (32), die eine Kammer (34) der mechanischen Übertragung bildet, die die mechanische Übertragung (18) zwischen der Zahnradabdeckung (32) und dem Gehäusehauptkörper (30) aufnimmt und an dem Gehäusehauptkörper (30) derart befestigt ist, dass ein Teil des Gehäusehauptkörpers (30) von der Seite des Hinterrads (WR) abgedeckt wird, wobei die Übertragungswelle (19) und die Zwischenwelle (20) drehbar am Gehäusehauptkörper (30) und der Zahnradabdeckung (32) getragen sind, wobei ein erster Ölzufuhrdurchgang (118) zum Zuführen von Öl zu einem ersten zentralen Öldurchgang (116), der koaxial in der Zwischenwelle (20) gebildet ist, im Gehäusehauptkörper (30) gebildet ist, wobei ein zweiter Ölzufuhrdurchgang (119) zum Zuführen von Öl zu einem zweiten zentralen Öldurchgang (117), der koaxial in wenigstens einem Teil der Übertragungswelle (19) gebildet ist, der der Kammer (34) der mechanischen Übertragung entspricht, in der Zahnradabdeckung (32) gebildet ist, und wobei der erste und der zweite Ölzufuhrdurchgang (118, 119) parallel zu einer passenden Fläche (88) des Gehäusehauptkörpers (30) und der Zahnradabdeckung (32) angeordnet sind.

## Revendications

1. Dispositif de transmission de puissance pour un véhicule à selle, comprenant une transmission à variation continue de type à courroie (16) qui est prévue entre une source de puissance (E) et un arbre de transmission (19) de façon à permettre de changer en continu une vitesse de rotation de puissance de la source de puissance (E), et une transmission mécanique (18) qui est disposée entre l'arbre de transmission (19) et un essieu (21) d'une roue arrière (WR) équipée d'un frein de roue arrière (110) et comprend un mécanisme d'engrenage planétaire (22) et un embrayage de transmission (23) pour changer une position d'engrenage du mécanisme d'engrenage planétaire (22),
dans lequel l'embrayage de transmission (23) et un deuxième engrenage de transmission de puissance (75) tournant conjointement avec un élément extérieur d'embrayage (76) de l'embrayage de transmission (23) sont disposés coaxialement sur l'arbre de transmission (19), un premier engrenage de transmission de puissance (74) est prévu à demeure sur l'arbre de transmission (19), le mécanisme d'engrenage planétaire (22), un troisième engrenage de transmission de puissance (95) s'engrenant avec le premier engrenage de transmission de puissance (74) de façon à tourner conjointement avec une couronne dentée (100) du mécanisme d'engrenage planétaire (22), et un quatrième engrenage de transmission de puissance (96) s'engrenant avec le deuxième engrenage de transmission de puissance (75) de façon à tourner conjointement avec une roue solaire (103) du mécanisme d'engrenage planétaire (22) sont disposés coaxialement sur un arbre intermédiaire (20) ayant un axe parallèle à l'arbre de transmission (19), un engrenage de sortie (97) transmettant de la puissance à l'essieu (21) est prévu à demeure sur l'arbre intermédiaire (20), la roue arrière (WR) est formée de façon à avoir un moyeu de roue (25) supporté sur l'essieu (21), une jante de roue (26) entourant le moyeu de roue (25) de façon à avoir un pneu (28) monté dessus, et une partie de liaison (27) fournissant une liaison entre le moyeu de roue (25) et la jante de roue (26), et la transmission à variation continue de type à courroie (16) est disposée de façon à enserrer la transmission mécanique (18) entre la transmission à variation continue de type à courroie (16) et la partie de liaison (27) dans une direction de la largeur du véhicule,
**caractérisé en ce que**
une partie d'évidement de logement (109) logeant une partie de la transmission mécanique (18) sur un côté dans la direction de la largeur du véhicule de la partie de liaison (27) est formée dans la roue arrière (WR), un frein de roue arrière (110) disposé sur un autre côté dans la direction de la largeur du véhicule de la partie de liaison (27) est prévu sur la roue arrière (WR), et le premier engrenage de transmission de puissance (74) et le mécanisme d'engrenage planétaire (22) sont disposés au sein de la partie d'évidement de logement (109) de façon à chevaucher une partie de la jante de roue (26) vue depuis une direction orthogonale à un axe de l'arbre de transmission (19) et l'axe de l'arbre intermédiaire (20).

2. Dispositif de transmission de puissance pour un véhicule à selle selon la revendication 1, dans lequel le moyeu de roue (25) est formé de façon à chevaucher la jante de roue (26) vue depuis une direction orthogonale à un axe de l'essieu (21), et un disque de frein (111) d'un frein à disque (110), qui est le frein de roue arrière, est monté sur le moyeu de roue (25) de façon à être disposé sur ledit autre côté dans la direction de la largeur du véhicule de la partie de liaison (27).

3. Dispositif de transmission de puissance pour un véhicule à selle selon la revendication 1, comprenant en outre un carter de transmission (29) logeant la transmission à variation continue de type à courroie (16) et la transmission mécanique (18),
dans lequel le carter de transmission (29) comprend un corps principal de carter (30) qui s'étend dans une direction d'avant en arrière du véhicule sur un côté de la roue arrière (WR), un organe couvercle (31) qui forme une chambre de transmission à variation continue de type à courroie (33) logeant la transmission à variation continue de type à courroie (16) entre l'organe couvercle (31) et le corps principal de carter (30) et est fixé au corps principal de carter (30) depuis un côté opposé à la roue arrière (WR), et un couvercle d'engrenage (32) qui, tout en formant une chambre de transmission mécanique (34) logeant la transmission mécanique (18) entre le couvercle d'engrenage (32) et le corps principal de carter (30), est fixé au corps principal de carter (30) de façon à couvrir une partie du corps principal de carter (30) depuis le côté de roue arrière (WR), une partie d'extrémité sur le côté de couvercle d'engrenage (32) de l'arbre de transmission (19) est supportée en rotation sur le couvercle d'engrenage (32) via un premier palier (57), une partie d'extrémité sur le côté de couvercle d'engrenage (32) de l'arbre intermédiaire (20) est supportée en rotation sur le couvercle d'engrenage (32) via un deuxième palier (59), un troisième palier (62) est disposé entre le couvercle d'engrenage (32) et l'essieu (21) s'étendant en rotation à travers le couvercle d'engrenage (32), et une partie d'extrémité sur le côté de roue arrière (WR) du deuxième palier (59) est disposée davantage sur le côté de roue arrière (WR) que des parties d'extrémité sur un côté opposé à la roue arrière (WR) des premier et troisième paliers (57, 62).

4. Dispositif de transmission de puissance pour un véhicule à selle selon la revendication 1, comprenant en outre un carter de transmission (29) logeant la transmission à variation continue de type à courroie (16) et la transmission mécanique (18),
dans lequel le carter de transmission (29) comprend un corps principal de carter (30) qui s'étend dans une direction d'avant en arrière du véhicule sur un côté de la roue arrière (WR), un organe couvercle (31) qui forme une chambre de transmission à variation continue de type à courroie (33) logeant la transmission à variation continue de type à courroie (16) entre l'organe couvercle (31) et le corps principal de carter (30) et est fixé au corps principal de carter (30) depuis un côté opposé à la roue arrière (WR), et un couvercle d'engrenage (32) qui, tout en formant une chambre de transmission mécanique (34) logeant la transmission mécanique (18) entre le couvercle d'engrenage (32) et le corps principal de carter (30), est fixé au corps principal de carter (30) de façon à couvrir une partie du corps principal de carter (30) depuis le côté de roue arrière (WR), l'embrayage de transmission (23), le deuxième engrenage de transmission de puissance (75), et le premier engrenage de transmission de puissance (74) sont disposés de façon à être agencés dans cet ordre depuis le côté de transmission à variation continue de type à courroie (16) dans une direction le long de l'axe de l'arbre de transmission (19), des diamètres externes (D1, D2) des premier et deuxième engrenages de transmission de puissance (74, 75) sont fixés plus petits qu'un diamètre externe (DC) de l'embrayage de transmission (23), et une partie d'évidement de débattement (82) est formée dans une face extérieure du couvercle d'engrenage (32) sur un côté radialement extérieur des premier et deuxième engrenages de transmission de puissance (74, 75), une partie de la jante de roue (26) étant disposée dans la partie d'évidement de débattement (82).

5. Dispositif de transmission de puissance pour un véhicule à selle selon la revendication 1, dans lequel l'embrayage de transmission (23), le deuxième engrenage de transmission de puissance (75), et le premier engrenage de transmission de puissance (74) sont disposés de façon à être agencés dans cet ordre depuis le côté de transmission à variation continue de type à courroie (16) dans une direction le long de l'axe de l'arbre de transmission (19), l'engrenage de sortie (97), le quatrième engrenage de transmission de puissance (96), et le mécanisme d'engrenage planétaire (22) sont disposés de façon à être agencés dans cet ordre depuis le côté de transmission à variation continue de type à courroie (16) dans une direction le long de l'axe de l'arbre intermédiaire (20), et le deuxième engrenage de transmission de puissance (75), le premier engrenage de transmission de puissance (74), le quatrième engrenage de transmission de puissance (96), et le mécanisme d'engrenage planétaire (22) sont disposés davantage sur le côté de roue arrière (WR) qu'une partie d' extrémité sur le côté de transmission à variation continue de type à courroie (16) de l'engrenage de sortie (97).

6. Dispositif de transmission de puissance pour un véhicule à selle selon la revendication 5, dans lequel une position relative du mécanisme d'engrenage planétaire (22) et du quatrième engrenage de transmission de puissance (96) par rapport à l'élément extérieur d'embrayage (76) est fixée de sorte que des parties du mécanisme d'engrenage planétaire (22) et du quatrième engrenage de transmission de puissance (96) chevauchent l'élément extérieur d'embrayage (76) vu depuis une direction le long des axes de l'arbre de transmission (19) et de l'arbre intermédiaire (20), et une position relative de l'engrenage de sortie (97) par rapport à l'élément extérieur d'embrayage (76) est fixée de sorte qu'au moins une partie de l'engrenage de sortie (97) chevauche l'élément extérieur d'embrayage (76) vu depuis une direction orthogonale aux axes de l'arbre intermédiaire (20) et de l'arbre de transmission (19).

7. Dispositif de transmission de puissance pour un véhicule à selle selon la revendication 6, dans lequel un organe de restriction (86) formant, en coopération avec un organe anti-rotation (85) supporté sur l'élément extérieur d'embrayage (76), un embrayage à roue libre (84) pour restreindre une direction de rotation de l'élément extérieur d'embrayage (76) est disposé entre l'élément extérieur d'embrayage (76) et le deuxième engrenage de transmission de puissance (75) dans une direction axiale de l'arbre de transmission (19) tout en chevauchant l'engrenage de sortie (97) vu depuis une direction orthogonale aux axes de l'arbre intermédiaire (20) et de l'arbre de transmission (19).

8. Dispositif de transmission de puissance pour un véhicule à selle selon la revendication 7, comprenant en outre un carter de transmission (29) logeant la transmission à variation continue de type à courroie (16) et la transmission mécanique (18),
dans lequel le carter de transmission (29) comprend un corps principal de carter (30) qui s'étend dans une direction d'avant en arrière du véhicule sur un côté de la roue arrière (WR), un organe couvercle (31) qui forme une chambre de transmission à variation continue de type à courroie (33) logeant la transmission à variation continue de type à courroie (16) entre l'organe couvercle (31) et le corps principal de carter (30) et est fixé au corps principal de carter (30) depuis un côté opposé à la roue arrière (WR), et un couvercle d'engrenage (32) qui forme une chambre de transmission mécanique (34) logeant la transmission mécanique (18) entre le couvercle d'engrenage (32) et le corps principal de carter (30), le couvercle d'engrenage (32) est fixé au corps principal de carter (30) de façon à couvrir une partie du corps principal de carter (30) depuis le côté de roue arrière (WR) tout en supportant, en coopération avec le corps principal de carter (30), l'organe de restriction (86) ayant un collier (87) disposé entre l'organe de restriction (86) et le corps principal de carter (30), et une face conjuguée (88) du couvercle d'engrenage (32) et du corps principal de carter (30) est disposée sur le côté opposé à la roue arrière (WR) par rapport à une face de butée (94) du collier (87) et de l'organe de restriction (86).

9. Dispositif de transmission de puissance pour un véhicule à selle selon la revendication 5, dans lequel un élément intérieur d'embrayage (77) de l'embrayage de transmission (23) est assemblé relativement sans rotation à l'arbre de transmission (19), l'élément extérieur d'embrayage (76) est supporté relativement en rotation sur l'arbre de transmission (19), le mécanisme d'engrenage planétaire (22) comprend la couronne dentée (100) et la roue solaire (103), une pluralité d'engrenages planétaires (101) qui s'engrènent avec la couronne dentée (100) et la roue solaire (103), et un porte-satellite (102) qui supporte en rotation les engrenages planétaires (101) et a l'engrenage de sortie (97) couplé de façon synchrone et opérationnelle au porte-satellite (102), et une partie du quatrième engrenage de transmission de puissance (96) est disposée de façon à chevaucher au moins une partie de la roue solaire (103) vue depuis une direction orthogonale à l'axe de l'arbre intermédiaire (20).

10. Dispositif de transmission de puissance pour un véhicule à selle selon la revendication 5, dans lequel un élément intérieur d'embrayage (77) de l'embrayage de transmission (23) est assemblé relativement sans rotation à l'arbre de transmission (19), l'élément extérieur d'embrayage (76) est supporté relativement en rotation sur l'arbre de transmission (19), le mécanisme d'engrenage planétaire (22) comprend la couronne dentée (100) et la roue solaire (103), une pluralité d'engrenages planétaires (101) qui s'engrènent avec la couronne dentée (100) et la roue solaire (103), et un porte-satellite (102) qui supporte en rotation les engrenages planétaires (101) et a l'engrenage de sortie (97) couplé de façon synchrone et opérationnelle au porte-satellite (102), une partie de bossage cylindrique (104) assemblée relativement sans rotation à l'arbre intermédiaire (20) est prévue d'un seul tenant avec le porte-satellite (102), et le quatrième engrenage de transmission de puissance (96) chevauchant au moins une partie de la partie de bossage (104) vue depuis une direction orthogonale à l'axe de l'arbre intermédiaire (20) est supporté relativement en rotation sur une périphérie extérieure de la partie de bossage (104).

11. Dispositif de transmission de puissance pour un véhicule à selle selon la revendication 5, dans lequel une partie d'un carter de transmission (29) logeant la transmission à variation continue de type à courroie (16) et la transmission mécanique (18) est formée à partir d'un corps principal de carter (30) s'étendant dans une direction d'avant en arrière du véhicule sur un côté de la roue arrière (WR), et un couvercle d'engrenage (32) formant, entre le couvercle d'engrenage (32) et le corps principal de carter (30), une chambre de transmission mécanique (34) logeant la transmission mécanique (18), l'engrenage de sortie (97) est formé, près du corps principal de carter (30), d'un seul tenant avec l'arbre intermédiaire (20) ayant des parties d'extrémités opposées de celui-ci supportées en rotation sur le corps principal de carter (30) et le couvercle d'engrenage (32), et le quatrième engrenage de transmission de puissance (96), le mécanisme d'engrenage planétaire (22), et le troisième engrenage de transmission de puissance (95) sont formés de façon à pouvoir être assemblés sur l'arbre intermédiaire (20) depuis une partie d'extrémité sur le côté de couvercle d'engrenage (32) de l'arbre intermédiaire (20).

12. Dispositif de transmission de puissance pour un véhicule à selle selon la revendication 5, comprenant en outre un carter de transmission (29) logeant la transmission à variation continue de type à courroie (16) et la transmission mécanique (18),
dans lequel le carter de transmission (29) comprend un corps principal de carter (30) qui s'étend dans une direction d'avant en arrière du véhicule sur un côté de la roue arrière (WR), un organe couvercle (31) qui forme une chambre de transmission à variation continue de type à courroie (33) logeant la transmission à variation continue de type à courroie (16) entre l'organe couvercle (31) et le corps principal de carter (30) et est fixé au corps principal de carter (30) depuis un côté opposé à la roue arrière (WR), et un couvercle d'engrenage (32) qui, tout en formant une chambre de transmission mécanique (34) logeant la transmission mécanique (18) entre le couvercle d'engrenage (32) et le corps principal de carter (30), est fixé au corps principal de carter (30) de façon à couvrir une partie du corps principal de carter (30) depuis le côté de roue arrière (WR), un quatrième palier (67) est disposé entre une partie de renflement (65) qui est formée sur le corps principal de carter (30) de façon à renfler vers le côté de chambre de transmission à variation continue de type à courroie (33) et l'arbre de transmission (19) s'étendant à travers la partie de renflement (65), et une poulie suiveuse (39) faisant partie de la transmission à variation continue de type à courroie (16) est supportée sur l'arbre de transmission (19) au sein de la chambre de transmission à variation continue de type à courroie (33) de sorte qu'au moins une partie du quatrième palier (67) chevauche une partie de la poulie suiveuse (39) vue depuis une direction orthogonale à l'axe de l'arbre de transmission (19),

13. Dispositif de transmission de puissance pour un véhicule à selle selon la revendication 1, comprenant en outre un carter de transmission (29) logeant la transmission à variation continue de type à courroie (16) et la transmission mécanique (18),
dans lequel le carter de transmission (29) comprend un corps principal de carter (30) qui s'étend dans une direction d'avant en arrière du véhicule sur un côté de la roue arrière (WR), un organe couvercle (31) qui forme une chambre de transmission à variation continue de type à courroie (33) logeant la transmission à variation continue de type à courroie (16) entre l'organe couvercle (31) et le corps principal de carter (30) et est fixé au corps principal de carter (30) depuis un côté opposé à la roue arrière (WR), et un couvercle d'engrenage (32) qui, tout en formant une chambre de transmission mécanique (34) logeant la transmission mécanique (18) entre le couvercle d'engrenage (32) et le corps principal de carter (30), est fixé au corps principal de carter (30) de façon à couvrir une partie du corps principal de carter (30) depuis le côté de roue arrière (WR), l'arbre de transmission (19) et l'arbre intermédiaire (20) sont supportés en rotation sur le corps principal de carter (30) et le couvercle d'engrenage (32), un premier passage d'alimentation en huile (118) pour alimenter en huile un premier passage d'huile central (116) formé coaxialement dans l'arbre intermédiaire (20) est formé dans le corps principal de carter (30), un second passage d'alimentation en huile (119) pour alimenter en huile un second passage d'huile central (117) formé coaxialement dans au moins une partie de l'arbre de transmission (19) qui correspond à la chambre de transmission mécanique (34) est formé dans le couvercle d'engrenage (32), et les premier et second passages d'alimentation en huile (118, 119) sont disposés en parallèle à une face conjuguée (88) du corps principal de carter (30) et du couvercle d'engrenage (32).
